# EUROPEAN PATENT APPLICATION

(11) **EP 1 623 953 A1**
(43) Date of publication of application: **08.02.2006**
(21) Application number: 04729206.5
(22) Date of filing: 23.04.2004
(51) Int. Cl.: B82B 3/00, G12B 21/08

(54) **PROBE**

(30) Priority: 25.04.2003 JP 2003122630
(71) Applicant: National Institute of Information and Communications Technology, Koganei-shi, Tokyo 184-8795 (JP)
(72) Inventor: OTOMO, Akira, Koganei-shi, Tokyo 184-8795 (JP); FURUMI, Seiichi, Koganei-shi, Tokyo 184-8795 (JP); MIKI, Hideki, Koganei-shi, Tokyo 184-8795 (JP); SUZUKI, Hitoshi, Koganei-shi, Tokyo 184-8795 (JP); TANAKA, Shukichi, Koganei-shi, Tokyo 184-8795 (JP); MASHIKO, Shinro, Koganei-shi, Tokyo 184-8795 (JP)
(74) Representative: Turner, James Arthur
(86) International application number: PCT/JP2004/005882
(87) International publication number: WO 2004/101429

(57) **Abstract**

Abstract: A probe comprising support (12) of a gold wire and, fixed thereon, intermediate excited medium (18a) having been excited to an excited triplet state by supply of external energy thereto, wherein transfer of excited triplet energy is effected from the intermediate excited medium toward a first molecule having a residue with bonding capability. The first molecule having thus been excited by the transfer of excited triplet energy is bonded with a second molecule having a residue with bonding capability as a bonding target to be bonded with the first molecule.

## Description

### TECHNICAL FIELD

The present invention relates to a probe suitable for use in manufacturing semiconductor devices and molecular devices, measuring the interactions and the like.

### BACKGROUND ART

Recent years have seen technical advances in nanotechnology fields such as the semiconductor device field and the molecular device field.

Conventionally, photolithography, electron beam lithography and microfabrication techniques using scanning probe microscopes and near-field probes have been used to form resist patterns for example based on the circuit designs of semiconductor devices.

Specifically, in electron beam lithography and photolithography using direct writing methods, resist patterns are formed by selectively polymerizing molecules with each other by exposing them to light or electrons (see for example NON-PATENT DOCUMENT 1).

In methods using scanning probe microscopy, resist patterns are formed using (1) polymerization or oxidation by electrical excitation (see for example NON-PATENT DOCUMENTS 2); (2) catalytic reactions (see for example NON-PATENT DOCUMENT 3); or (3) the dip pen system (see for example NON-PATENT DOCUMENT 4). In methods using near-field light probes, resist patterns are formed by photopolymerizing molecules with each other by exposing them to near-field light (see for example NON-PATENT DOCUMENT 5).

Meanwhile, new measurement technologies offering better resolution and control than before are being developed to support the nanotechnology field, along with techniques for measuring new physical and chemical properties with molecular resolution as a means of evaluating molecules, nanoparticles and other nanostructures.
NON-PATENT DOCUMENT 1
   Nanotechnology and Polymers, Ed. The Society of Polymer Science Japan, NTS, second lecture, "The Role of Polymers in Nanofabrication"
NON-PATENT DOCUMENTS 2
   Y. Okawa and M. Aono, *Nature* 409, 683 (2001); Y. Okawa and M. Aono, J. *Chem. Phys.* 115, 2317-2322 (2001); G. Dujardrin, R. E. Walkup, Ph. Avouris, *Science* 255, 1232-1235 (1992)
NON-PATENT DOCUMENT 3
   B. J. McIntyre, M. Salmeron and G. A. Somorjai, Science 265, 1415-1418 (1994)
NON-PATENT DOCUMENT 4
   R. D. Piner, J. Zhu, F. Xu, S. Hong and C. A. Mirkin, *Science* 283, 661-663 (1999)
NON-PATENT DOCUMENT 5
   T. Ono and M. Esashi, *Jpn. J*. *Appl. Phys.* 37, 6745-6749 (1998); S. Tanaka et al., *Jpn. J*. *Appl. Phys.* 37, 6739-6744 (1998); Y. Yamamoto et al., *Appl. Phys. Lett.* 76, 2173, 2175 (2000)

However, the following problems have arisen along with these developments in nanotechnology.

For example, because of the problems explained below it has been difficult to microfabricate resist patterns by the methods described above with single-molecule resolution in order to meet recent demands for miniaturization and densification of semiconductor devices.

For example, in the case of photopolymerization using the aforementioned photolithography methods, the resolution of the resist pattern is limited to about the half-wave length of the irradiating light. Moreover, in the case of polymerization using electron beam lithography, the resolution of the resist pattern is limited by the focal shape (about 5 nm dia.) of the electron beam.

In the case of resist pattern formation using a scanning probe microscope, the following problems occur corresponding to (1) through (3) above. (1): It is difficult to obtain high resolution with good reproducibility due to changes in the conduction characteristics accompanying deformation of the tip shape of the probe. (2): Not only is resolution limited by the tip shape of the probe as in (1), but it is difficult to control the catalytic reaction field because a catalytic reaction occurs constantly in the presence of a reaction source.
(3): Resolution in this case is limited by the relationship between the volume of liquid dripping from the probe and the wettability of the substrate onto which the liquid drips.

Moreover, when using a near-field light probe the resolution of the resist pattern is limited by the size of the near-field light.

There is demand for a method to resolve the aforementioned issues, allowing a resist pattern to be formed with single-molecule resolution.

As an alternative to conventional semiconductor devices, there has been dramatic development in recent years of "nanodevice" technologies, including molecular devices in which multiple functional molecules capable of operating in dimensions of single molecule units are arranged precisely. At present, however, many technological problems need to be resolved so that specific functional molecules can be arranged molecule by molecule in specific positions.

In conjunction with these developments, there is also demand for new measurement technologies for measuring nano-level interactions as support technologies for nanotechnology.

It is therefore an object of the present invention to provide a desirable probe for use in manufacturing and measuring the interactions and the like of nanodevices and the like for example.

### DISCLOSURE OF THE INVENTION

The probe of the present invention is configured as follows.

That is, it is provided with a support and an intermediate excitation medium, which is fixed on the support and is excited when external energy is supplied from the outside, and which causes a first molecule in the vicinity thereof having a bonding residue or a bonding residue group to bond with a bonding target which is to be bonded to the first molecule.

With such a probe, when the intermediate excitation medium is excited by external energy, the intermediate excitation medium exerts physical effect on the first molecule and the bonding target. As a result, with this probe, not only is bonding between the fist molecule and the bonding target accomplished by means of the stable excited state of the intermediate excitation medium, but resolution on a single-molecule unit or scale (that is, on a nanometer scale) can be obtained with good control.

Moreover, with the probe of the present invention there is no worry of resolution being limited by light or electrons as in conventional lithography by direct excitation, and no worry of resolution being limited by probe tip shape as it is with a scanning probe microscope or near-field light probe.

Consequently, using such a probe it is possible to achieve greater miniaturization and higher densities than in the past in manufacturing a semiconductor device for example.

Moreover, using such a probe functional molecules capable of operating in dimensions of single molecule units can be arranged with great accuracy in specific locations. That is, the probe of the present invention is suited to the manufacture of molecular devices and other devices.

Moreover, preferably either one or both of the first molecule and the bonding target is fixed on a support member.

Moreover, the support is preferably positioned with sufficient accuracy with respect to the support member so as to allow bonding.

In this way, bonding between the first molecule and the bonding target can be achieved more reliably.

The positioning accuracy of the support relative to the support member is preferably 1 nm or less.

For example, when the intermediate excitation medium or the functional molecule described below is an aromatic molecule, given that the size of each benzene ring is about 0.28 nm, the size of an intermediate excitation medium or functional molecule composed of multiple benzene rings is about 1 nm. Consequently, in order to achieve precise arrangement of a functional molecule or bonding with molecular accuracy based on the intermediate excitation molecule, a positioning accuracy of 1/10 of that or 0.1 nm is thought to be necessary. When the intermediate excitation medium is a nanoparticle such as a quantum dot or the like about 10 nm in size, a positioning accuracy of 1/10 of that or 1 nm is thought to be necessary. Thus, bonding with molecular-scale accuracy can be accomplished if the misalignment of the support with respect to the support member is no more than 1 nm.

Moreover, when the intermediate excitation medium is excited energy to be used for bonding is preferably generated therefrom. The energy to be used for bonding moves from the excited intermediate excitation medium to the first molecule to achieve bonding.

Thus, the first molecule, which is within the range of transferring the energy for bonding from the excited intermediate excitation medium, can be bonded with the bonding target to be bonded to the first molecule. When bonding is achieved in this way, resolution can be achieved with good control in single-molecule units based on the intermediate excitation medium.

Transfer of energy for bonding from the excited intermediate excitation medium to the first molecule is preferably excited triplet-triplet energy transfer.

In this way, not only can the arrival range of the energy for bonding be controlled to within about 1 nm, thus improving positioning accuracy, but the first molecule and bonding target can be bonded with low external energy (sometimes called excitation energy).

Moreover, when the intermediate excitation medium is excited, bonding is preferably accomplished by means of electron movement between the excited intermediate excitation medium and the first molecule.

In this way, the first molecule, which is radical ionized by means of transfer of electrons between the excited intermediate excitation medium and the first molecule, can be bonded to the bonding target which is to be bonded to the first molecule. In this way resolution can be achieved with good control in single-molecule units based on the intermediate excitation medium.

The external energy is preferably applied in the form of light, electrons or ions.

When the intermediate excitation medium is a photosensitized molecule, the external energy is preferably applied as light.

In this way, a configuration can be achieved which uses photoexcited energy transfer or photoexcited electron transfer, which are photosensitized reactions stemming from the photosensitized molecule.

The photosensitized molecule preferably comprises a probe branch that forms the end of the probe and a plurality of bonding branches extending radially from the tip of the probe branch on the support side to be fixed by selective bonding to the support.

In this way, the photosensitized molecule is bonded more securely to the support, so that the photosensitized molecule can be fixed more firmly to the support. Moreover, because the bonding branches of the intermediate excitation molecule which bond to the support are radial, the region of the support to which the photosensitized molecule is to be fixed does not need to be formed by advanced techniques to a size as small as that of the probe branch which functions as the photosensitized molecule, and manufacturing costs are reduced.

The probe branch and the bonding branches preferably have different structures, and the plural number of bonding branches preferably branch radially from the tip of the probe branch, forming a tree-like structure with the probe branch as a trunk.

Moreover, the photoexcited molecule preferably has a dendrimer structure.

Of the dendrimer parts which has the dendrimer structure, the boding branches which fix to the support have a dense radial structure which tends to exclude the bonding branches of other molecules. Consequently, it is possible to ensure that only one molecule of the dendrimer structure is fixed to the support. Moreover, the dendrimer structure has a plurality of bonding branches, so that a strong bond with the support can be maintained.

The dendrimer structure is preferably N-[3-{3,5-bis {3,5-bis[3,5-bis(4-mercaptobenzylthio)benzylthio]benzylthio}benzyloxy}-propionyl-4-nitro-1-naphthylamine.

The photosensitized molecule is preferably an N-acetyl-4-nitro-1-naphthylamine derivative.

The support preferably has one molecule of the photosensitized molecule fixed thereon.

When the intermediate excitation medium is a photocatalyst, the external energy is preferably applied as light.

The photocatalyst is preferably titanium dioxide.

The bonding target may preferably be a second molecule having a bonding residue.

The bonding target may also preferably be a material object other than a molecule.

Moreover, the intermediate excitation medium is preferably fixed to the support by chemical bonds.

In this way, because the intermediate excitation medium can be fixed to the support not by an adhesive but by selective chemical bonds (also called chemical adsorption) such as coordinate bonds, covalent bonds, ionic bonds or the like, there is no risk of reliability declining due to deterioration of the adhesive.

The bonding residue may preferably be an aliphatic residue having an unsaturated double bond or unsaturated triple bond.

The bonding residue may also preferably be an aromatic residue having an unsaturated double bond or unsaturated triple bond.

When the aromatic residue having an unsaturated double bond is a cinnamic acid group, the intermediate excitation medium is preferably N-[3-{3,5-bis{3,5-bis[3,5-bis(4-mercaptobenzylthio)benzylthio]benzylthio}benzyloxy}-propionyl-4-nitro-1-naphthylamine.

Moreover, the probe of the present invention has a configuration such as the following.

That is, it is provided with a support and an interacting substance which is fixed on the support and which physically interacts with a probe scanning target.

With such a probe, the interacting substance and the probe scanning target can be made to physically interact (by dipole interaction, static interaction, magnetic interaction or the like).

As a result, information about physical interactions occurring between the interacting substance and the probe scanning target can be obtained based on a resolution determined by the interacting substance (particle or molecule (also called an active molecule)).

Moreover, it is provided with a support and an interacting substance which is fixed on the support and which chemically interacts with a probe scanning target.

With such a probe, the interacting substance and the probe scanning target can be made to chemically interact (by hydrogen bonding, ionic bonding or the like).

As a result, information about chemical interactions occurring between the interacting substance and the probe scanning target can be obtained based on a resolution determined by the interacting substance (particle or molecule (also called an active molecule)).

The interacting substance may preferably be a molecule.

In this way, information about interactions occurring between the interacting substance and the probe scanning target can be obtained based on a resolution in single-molecule units.

This molecule also preferably comprises a probe branch that forms the end of the probe and a plural number of bonding branches extending radially from the tip of the probe branch on the support side to be fixed by selective bonding to the support.

In this way, the interacting substance is bonded more securely to the support, so that the interacting substance can be fixed firmly to the support. Moreover, because the bonding branches of the molecule which bond to the support are radial, the region of the support to which the interacting substance is fixed does not need to be formed by advanced techniques to a size as small as that of the probe branch which functions as the interacting substance, and manufacturing costs can be reduced.

The probe branch and the bonding branches preferably have different structures, and the plurality of bonding branches preferably branch radially from the tip of the probe branch, forming a tree-like structure with the probe branch as the trunk.

Moreover, this molecule preferably has a dendrimer structure.

Of the dendrimer parts which has the dendrimer structure, the bonding branches which fix to the support have a dense radial structure which tends to exclude the bonding branches of other molecules. Consequently, it is possible to ensure that only one molecule of the dendrimer structure is fixed to the support. Moreover, the dendrimer structure has a plurality of bonding branches, thus strengthening the bond with the support. In addition, since discrete arrangement of the interacting molecule is limited by the size of the dendrimer structure, even if a plural number of molecules are fixed on the support it is easy to cause only one interacting molecule with a tip on the support to act effectively as the probe.

The probe scanning target may also preferably be a molecule.

The interacting substance may preferably be a particle with magnetism.

In this way, the probe can be used for example as the probe of a magnetic force scanning microscope. Moreover, information about the interactions between the interacting substance and the probe scanning target can be obtained based on a resolution of particle units.

The interacting substance can preferably be fixed to the support by chemical bonds.

In this way, because the interacting substance can be fixed to the support not by an adhesive but by selective chemical bonds (also called chemical adsorption) such as coordinate bonds, covalent bonds, ionic bonds or the like, there is no risk of reliability declining due to deterioration of the adhesive.

Moreover, the probe of the present invention has a configuration such as the following.

That is, it is provided with a support and an active molecule which is fixed so as to protrude from the support and which acts physically on a probe scanning target.

With this probe, the active molecule fixed on the support is made to contribute to a variety of reactions corresponding to the physical effects of the active molecule on the probe scanning target, thus permitting control and measurement on a molecular level based on the active molecule. In this case, the active molecule is a molecule which exerts a physical effect when in either an excited or non-excited state.

Moreover, this active molecule may be either one molecule or two or more molecules depending on the resolution at which the probe scanning target is to be scanned.

Preferably one such active molecule can be fixed on a support.

The active molecule preferably comprises a probe branch that forms the end of the probe and a plural number of bonding branches extending radially from the tip of the probe branch on the support side to be fixed by selective bonding to the support.

In this way, the bonds between the active molecule and the support are made more secure, thus fixing the active molecule firmly to the support. Moreover, because the bonding branches of the active molecule which bond to the support are radial, the region of the support to which the active.molecule is fixed does not need to be formed by advanced techniques to a size as small as that of the probe branch which functions as the interacting substance, and manufacturing costs can be reduced.

The probe branch and the bonding branches preferably have different structures, and the plural number of bonding branches preferably branch radially from the tip of the probe branch, forming a tree-like structure with the probe branch as a trunk.

Moreover, this active molecule preferably has a dendrimer structure.

Of the dendrimer parts which has the dendrimer structure, the bonding branches which fix to the support have a dense radial structure which tends to exclude the bonding branches of other molecules. Consequently, it is possible to ensure that only one molecule of the dendrimer structure is fixed to the support. Moreover, the dendrimer structure has a plurality of bonding branches, thus strengthening the bond with the support.

Preferably one molecule of the active molecule can be fixed to a support.

Moreover, the active molecule can preferably be fixed to the support by chemical bonds.

In this way, because the interacting substance is fixed to the support not by an adhesive but by selective chemical bonds (also called chemical adsorption) such as coordinate bonds, covalent bonds, ionic bonds or the like, there is no risk of reliability declining due to deterioration of the adhesive.

### BRIEF DESCRIPTION OF THE DRAWINGS

Figures 1(A) and 1(B) are schematic cross-sections for explaining the first embodiment of the present invention.
Figures 2(A), 2(B) and 2(C) are schematic cross-sections for explaining the first embodiment of the present invention.
Figures 3(A) and 3(B) are schematic cross-sections for explaining the second embodiment of the present invention.
Figures 4(A), 4(B) and 4(C) are schematic cross-sections for explaining the second embodiment of the present invention.
Figure 5 is a schematic cross-section for explaining the third embodiment of the present invention.
Figures 6(A) and 6(B) are schematic cross-sections for explaining the third embodiment of the present invention.
Figures 7(A) and 7(B) are schematic cross-sections for explaining the third embodiment of the present invention.

### BEST MODE FOR CARRYING OUT THE INVENTION

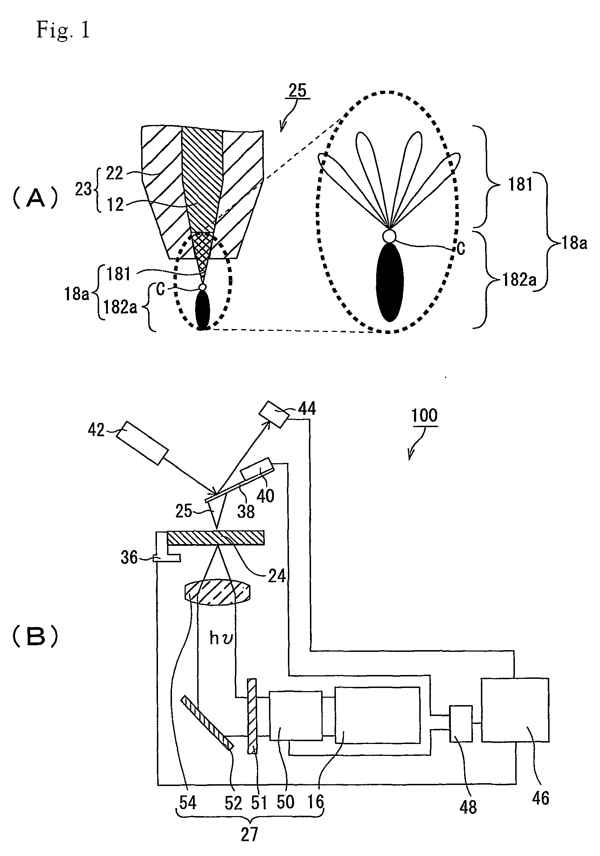

Embodiments of the present invention are explained below with reference to Figures 1 through 7. In these figures the various constituent elements, sizes and arrangements are only explained in simplified form so that the invention can be understood, and the present invention is not limited by these illustrated examples. Moreover, while specific materials, conditions and the like may be used in the following explanations, these materials and conditions are only desirable examples and do not limit the invention in any way.

### (First Embodiment)

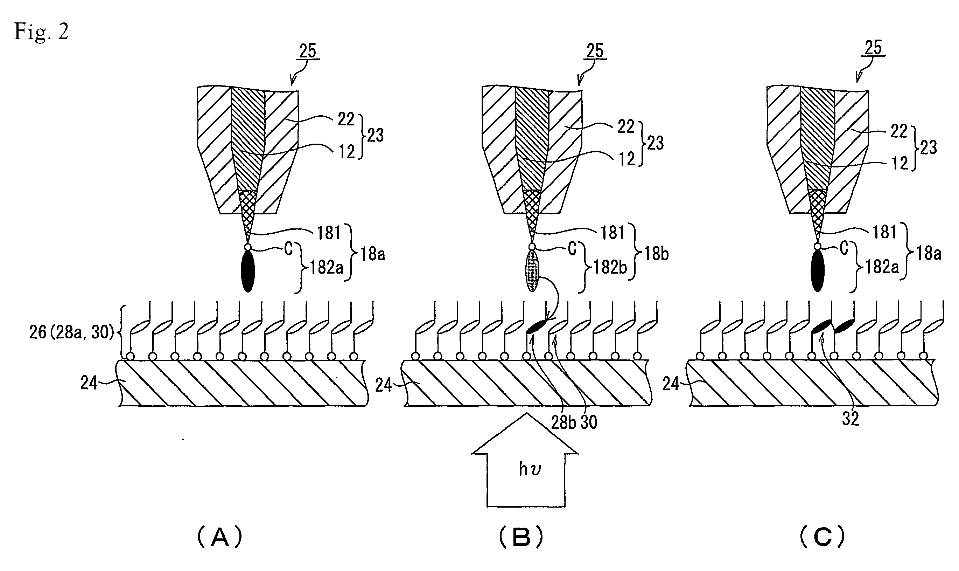

The first embodiment of the present invention will be explained with reference to Figures 1 and 2. Figure 1(A) is a partial cross-section showing a simplified view of the configuration of probe 25 of this embodiment. Figure 1(B) is a partial cross-section showing a simplified view of the configuration of molecular bonding device 100 which is equipped with probe 25 of this embodiment. Figures 2 are partial cross-sections which explain in simplified form a molecular bonding method using molecular bonding device 100 equipped with probe 25 of this embodiment.

As shown in Figure 1(A), probe 25 of this embodiment is provided mainly with support 12 and intermediate excitation medium 18a, which is fixed on support 12. In the following explanation, photosensitized molecule 18a, which is the intermediate excitation medium, may be referred to as the "probe molecule structure".

Support 12 of this embodiment is formed from a gold (Au) wire with an outer diameter of 4 nm. This gold wire is inserted into glass capillary tube 22 to form double-structured probe body 23. This probe body 23 can be obtained for example by first using a pipette puller (Sutter P2000) to pull a 1 mm outer diameter glass capillary tube with 0.05 mm diameter gold wire inserted therein, and then adjusting the tip of the capillary tube to the bore thickness of 4 nm either by mechanical polishing using a micropipette beveler (Sutter BV-10) with 0.05 µm diameter alumina (Al₂O₃) or the like, or by chemical polishing using a 40 wt% aqueous hydrogen fluoride (HF) solution or the like, or by focused ion beam etching, exposing the gold tip surface. Details are described in "Nanometer-sized electrochemical sensors," Y. Shao et al., *Anal. Chem. 69,* 1627 (1997).

Intermediate excitation medium 18a is a medium which contributes indirectly to a specific reaction when it absorbs external energy and becomes excited. That is, when this intermediate excitation medium 18a is excited it exerts some physical action on an object to be scanned by the probe which is in the vicinity of intermediate excitation medium 18a.

In this embodiment, N-[3-{3,5-bis{3,5-bis[3,5-bis(4-mercaptobenzylthio)benzylthio]benzylthio}benzyloxy}-propionyl-4-nitro-1-naphthylamine, which is the dendrimer structure represented by Formula (1) below, is used as intermediate excitation medium 18a. That is, a photosensitized molecule consisting of a N-acetyl-4-nitro-1-naphthylamine derivative is used here as intermediate excitation medium 18a.

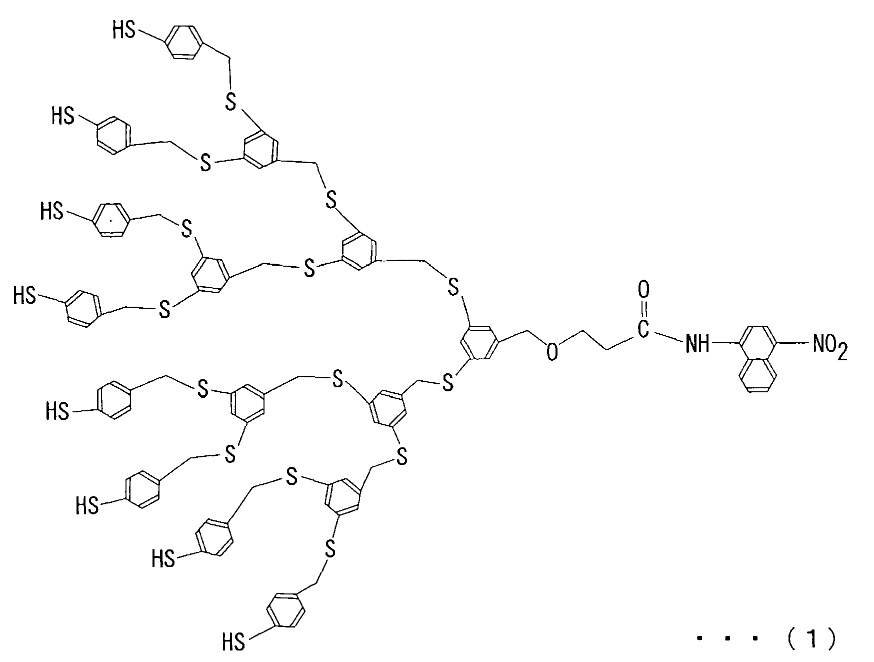

That is, photosensitized molecule 18a, which is the intermediate excitation medium in this embodiment, is provided with probe branch 182a and bonding branch part 181. Specifically, this photosensitized molecule 18a has a tree-like structure in which the multiple bonding branches of bonding branch part 181 branch radially from probe branch 182a.

Specifically, in this sample configuration, probe branch 182a, which is the trunk of the tree-like structure, is the part which functions as the photosensitized molecule and extends towards substrate 24, thus forming the end part of the probe. The multiple bonding branches of bonding branch part 181 have one end bonded to core C which is the tip of probe branch part 182a, and which is for example a - CH₂-O- group in the compound of Formula (7) above (see Figure 1(A)), with the other ends spreading radially in three dimensions towards support 12 so as to cover support 12. The bonds between photosensitized molecule 18a and support 12 is strengthened as a result, so that 1 molecule of photosensitized molecule 18a is firmly fixed on support 12.

That is, photosensitized molecule 18a in this sample configuration has multiple substitutional groups as bonding branches which spread radially towards support 12 from core C which is the central framework, and one substitutional group as the probe branch which extends from core C towards substrate 24 and which has a different structure from the substitutional groups which are the bonding branches.

Moreover, because bonding branch part 181 which is the part of photosensitized molecule 18a which bonds to support 12 has a radially spreading structure, the area of support 12 to which photosensitized molecule 18a is fixed does not need to be formed by advanced techniques to a size as small as that of the probe branch. As a result, the desired number of photosensitized molecules can be fixed to support 12 even when it is technically difficult to work this region to the size of probe branch part 182a. Moreover, manufacturing costs can be reduced because advanced fabrication techniques are not needed.

For example, considering the area of the base of the cone formed by the spreading tips of bonding branch part 181, the size of the area of support 12 which bonds to bonding branch part 181 can be an area sufficient for one photosensitized molecule 18a to bond to one support 12. Moreover, when a given number greater than one of photosensitized molecules 18a are to bond to support 12, the size of the area which bonds to bonding branch part 181 can be an area sufficient for that number of bonding branch parts 181 to bond to support 12 considering the area of the base of the cone formed by the spreading tips of bonding branch part 181. In this way, any desired number of photosensitized molecules can be fixed to support 12.

That is, intermediate excitation medium 18a here is a probe molecular structure which is a conical dendrimer structure with an open length of 4 nm having mercapto (-SH) groups at the end of the branches. The mercapto (-SH) groups at the ends of intermediate excitation medium 18a bond to the gold of support 12, thus forming Au-S bonds and fixing intermediate excitation medium 18a to support 12. That is, because the intermediate excitation medium is fixed to the support by selective chemical adsorption, there is no risk of reliability declining due to deterioration of the adhesive as there would be if the intermediate excitation medium were fixed to support 12 using a synthetic resin or other adhesive. Coordinate bonding, covalent bonding, ionic bonding or the like can be selected as desired as the form of selective chemical adsorption depending on the object and design. Moreover, intermediate excitation medium 18a is not limited hereby and any that functions as a photosensitized molecule can be selected as desired. In addition, a crystal particle which is a photocatalyst or the like can be used instead of a photosensitized molecule as intermediate excitation medium 18a.

One method of manufacturing the intermediate excitation medium N-[3-{3,5-bis{3,5-bis[3,5-bis(4-mercaptobenzylthio)benzylthio]benzylthio}benzyloxy}-propionyl-4-nitro-1-naphthylamine is explained below. In this manufacturing method, the procedures of steps (A) through (L) are performed in that order.

### (A) Manufacture of 3,5-bis(dimethylthiocarbamoyloxy)benzoic acid methyl

16.8 g of the 3,5-dihydroxybenzoic acid methyl shown by Formula (2) below, 22.0 g of the dimethylthiocarbamoyl chloride shown by Formula (3) below, and 30.0 g of potassium carbonate (K₂CO₃) were reacted for 24 hours at between 30°C and 35°C while being mixed and agitated in 500 ml of acetone (CH₃COCH₃). After completion of the reaction, the acetone was distilled off under reduced pressure. 500 ml of ice water was added to the resulting residue, and the precipitated crystals were filtered out and recrystallized with ethanol (C₂H₅OH) to obtain 32.2 g of the 3,5-bis(dimethylthiocarbamoyloxy)benzoic acid methyl shown by Formula (4) below.

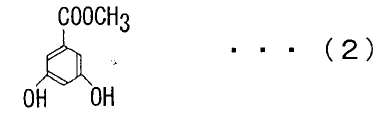

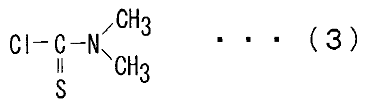

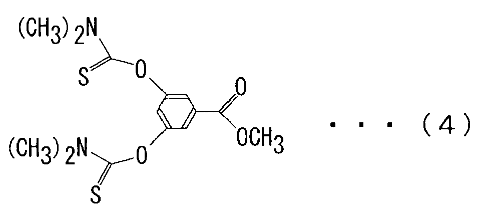

### (B) Manufacture of 3,5-bis(dimethylcarbamoylthio)benzoic acid methyl

32.0 g of the 3,5-bis(dimethylthiocarbamoyloxy)benzoic acid methyl obtained in (A) was added with circulating agitation to 200 ml of the 1,3-dimethyl-2-imidazolidinone shown by Formula (5) below, and maintained at between 220°C and 226°C to accomplish rearrangement. Next, circulating agitation was continued for a further 2 hours, and the 1,3-dimethyl-2-imidazolidinone was removed under reduced pressure. 500 ml of ice water was added to the resulting residue, and the precipitated crystals were filtered out and recrystallized with acetone to obtain 25.3 g of the 3,5-bis(dimethylcarbamoylthio)benzoic acid methyl shown by Formula (6) below.

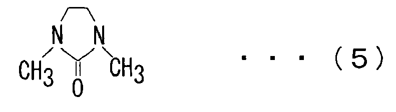

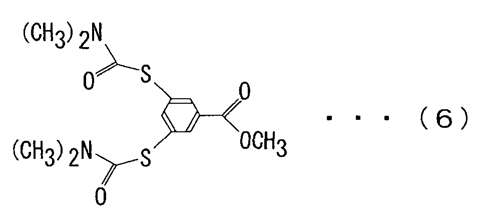

### (C) Manufacture of 3,5-bis(4-dimethylcarbamoylthiobenzylthio)-benzoic acid methyl

25.0 g of the 3,5-bis(dimethylcarbamoylthio)benzoic acid methyl obtained in (B) was dissolved in 300 ml of acetone and 2.1 equivalents of sodium methoxide (CH₃ONa) were added and agitated at room temperature for 2 hours. After completion of agitation, 34.0 g of the 4-dimethylcarbamoylthiobenzyl chloride shown by Formula (7) below was added to the solution and reacted for 3 hours. After completion of the reaction, the acetone was distilled off under reduced pressure. 500 ml of ice water was added to the resulting residue, and the precipitated crystals were filtered out and recrystallized with methanol to obtain 19.8 g of the 3,5-bis(4-dimethylcarbamoylthiobenzylthio)benzoic acid methyl shown by Formula (8) below.

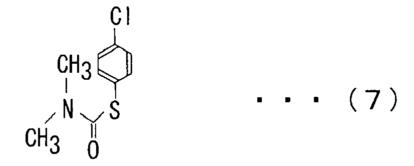

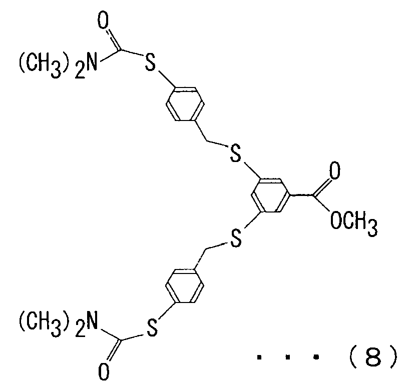

### (D) Manufacture of 3,5-bis(4-dimethylcarbamoylthiobenzylthio)benzyl alcohol

19.5 g of the 3,5-bis(4-dimethylcarbamoylthiobenzylthio)benzoic acid methyl obtained in (C) was dissolved in 300 ml of toluene (C₆H₅CH₃), and a 70 wt% toluene solution containing 1.2 equivalents of sodium hydrogenated bis(2-methoxyethoxy)aluminum was dripped into this solution with agitation over the course of 30 minutes at between 5°C and 10°C in a flow of dry nitrogen (N₂). After completion of dripping, this was reacted for another hour at between 5°C and 10°C in a flow of dry nitrogen. After completion of the reaction, this solution was added with agitation to 500 ml of a 10 wt% hydrochloric acid (HCl) solution which had been cooled to between 0°C and 5°C, and extracted twice with 200 ml of ethyl acetate (CH₃COOC₂H₅). After extraction it was washed successively with saturated sodium chloride solution (sat. NaCl aq) and saturated sodium bicarbonate solution (sat. NaHCO₃ aq), and then dried with magnesium sulfate (MgSO₄). Next, the ethyl acetate was distilled off under reduced pressure, and the residue was purified by silica gel column chromatography (developing solvent: chloroform) to obtain 18.0 g of the 3,5-bis(4-dimethylcarbamoylthiobenzylthio)benzyl alcohol shown by Formula (9) below.

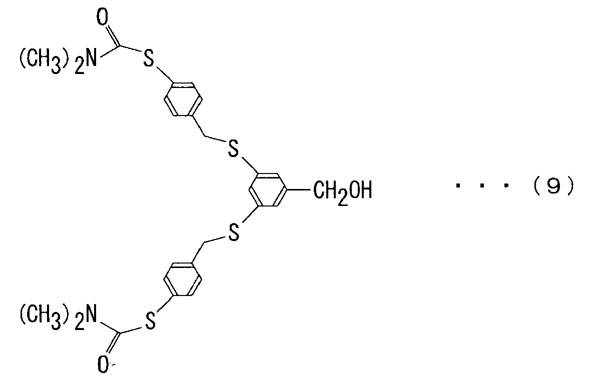

### (E) Manufacture of 3,5-bis(4-dimethylcarbamoylthiobenzylthio)benzyl chloride

18.0 g of the 3,5-bis(4-dimethylcarbamoylthiobenzylthio)benzyl alcohol obtained in (D) was dissolved in 300 ml of carbon tetrachloride (CCl₄), and 1.2 equivalents of triphenylphosphine (Sigma-Aldrich Japan) supported on polystyrene were added with agitation at between 5°C and 10°C in a flow of dry nitrogen. Next, circulating agitation was continued for 2 hours as the temperature was gradually raised, and the temperature was then lowered to room temperature to remove the polystyrene resin. The removed resin was washed twice with 200 ml of chloroform (CHCl₃) and condensed under reduced pressure, and the residue was purified by column chromatography to obtain 17.5 g of the 3,5-bis(4-dimethylcarbamoylthiobenzylthio)benzyl chloride shown by Formula (10) below.

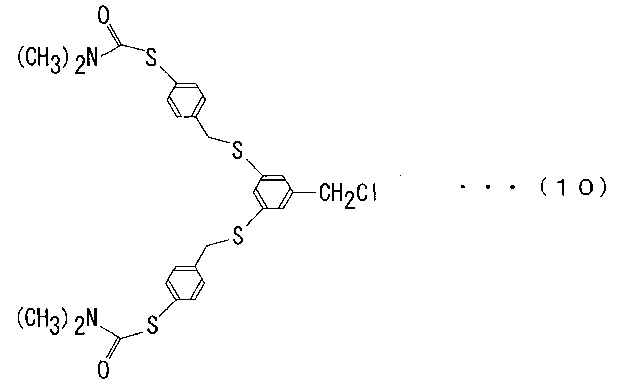

### (F) Manufacture of 3,5-bis[3,5-bis(4-dimethylcarbamoylthiobenzylthio)benzylthio]benzoic acid methyl

5.0 g of the 3,5-bis(dimethylcarbamoylthio)benzoic acid methyl obtained in (B) was dissolved in 300 ml of acetone, and agitated for 2 hours at room temperature after addition of 2.1 equivalents of sodium methoxide. After agitation was complete, 17.0 g of the 3,5-bis(4-dimethylcarbamoylthiobenzylthio)benzyl chloride obtained in (E) was added to this solution and reacted for 3 hours. After completion of the reaction, the acetone was distilled off under reduced pressure. The resulting residue was purified by column chromatography (developing solvent: chloroform) to obtain 14.2 g of the 3,5-bis[3,5-bis(4-dimethylcarbamoylthiobenzylthio)benzylthio]benzoic acid methyl shown by Formula (11) below.

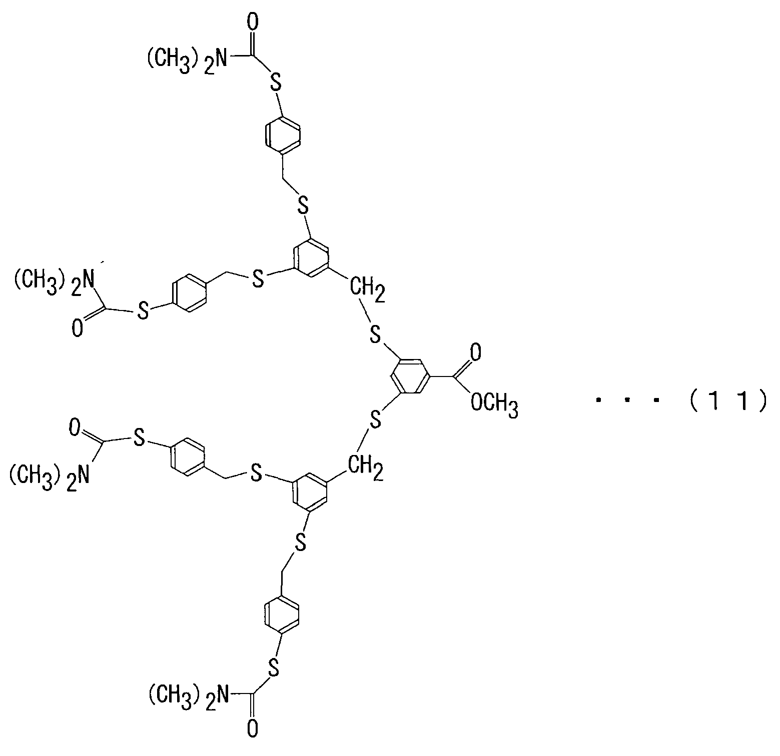

### (G) Manufacture of 3,5-bis[3,5-bis(4-dimethylcarbamoylthiobenzylthio)benzylthio]benzyl alcohol

14.0 g of the 3,5-bis[3,5-bis(4-dimethylcarbamoylthiobenzylthio) benzylthio]benzoic acid methyl obtained in (F) was dissolved in 200 ml of toluene, and a 70 wt% toluene solution containing 1.2 mole of sodium hydrogenated bis(2-methoxyethoxy)aluminum was dripped in over the course of 30 minutes at between 5°C and 10°C in a flow of dry nitrogen. After completion of dripping, this was reacted for another hour at between 5°C and 10°C in a flow of dry nitrogen. After completion of the reaction, this solution was added with agitation to 300 ml of a 10 wt% hydrochloric acid solution which had been cooled to between 0°C and 5°C, and extracted twice with 150 ml of ethyl acetate. After extraction, the organic layer was washed successively with saturated sodium chloride solution and saturated sodium bicarbonate solution, and dried with magnesium sulfate. The ethyl acetate was then distilled off under reduced pressure, and the residue was purified by column chromatography to obtain 12.6 g of the 3,5-bis[3,5-bis(4-dimethylcarbamoylthiobenzylthio)benzylthio]benzyl alcohol shown by Formula (12) below.

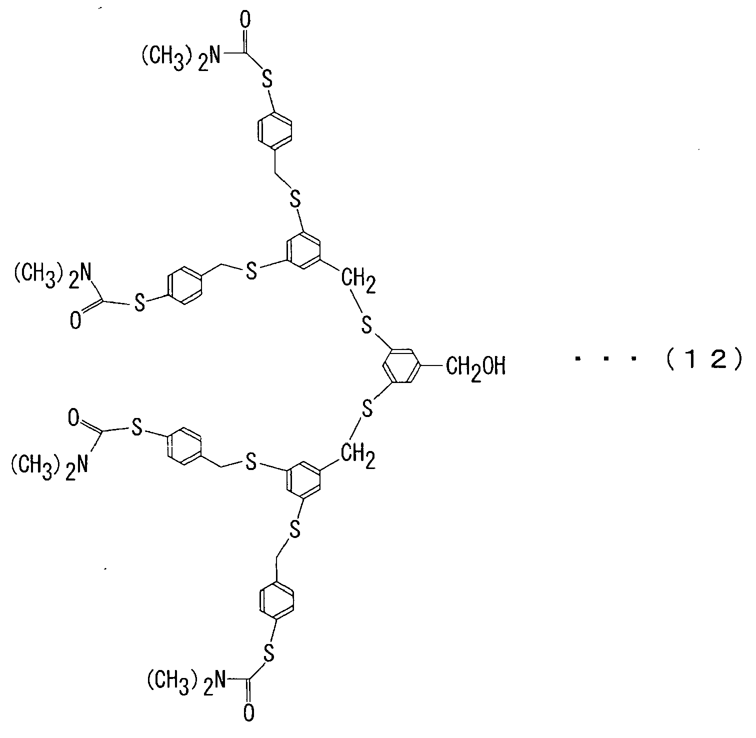

### (H) Manufacture of 3,5-bis[3,5-bis(4-dimethylcarbamoylthiobenzylthio)benzylthio]benzyl chloride

12.5 g of the 3,5-bis[3,5-bis(4-dimethylcarbamoylthiobenzylthio)benzylthio]benzyl alcohol obtained in (G) was dissolved in 200 ml of carbon tetrachloride, and 1.2 equivalents of PS-triphenylphosphine were added with agitation at between 5°C and 10°C in a flow of dry nitrogen. Next, circulating agitation was continued for 2 hours as the temperature was raised gradually, and the temperature was then cooled to room temperature to remove the resin. The removed resin was washed twice with 200 ml chloroform and distilled off under reduced pressure, and the residue was purified by column chromatography to obtain 12.0 g of the 3,5-bis[3,5-bis(4-dimethylcarbamoylthiobenzylthio)benzylthio]benzyl chloride shown by Formula (13) below.

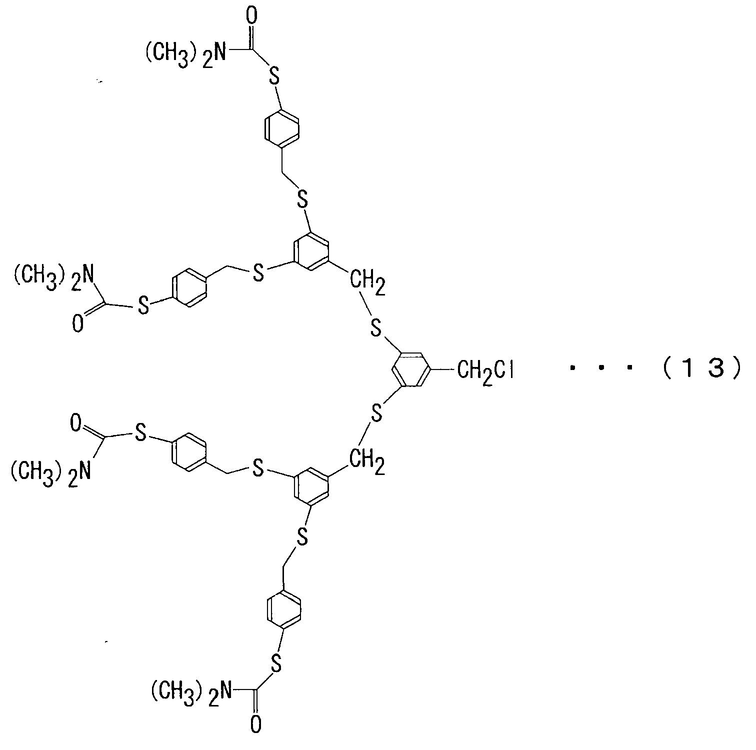

### (I) Manufacture of 3,5-bis{3,5-bis[3,5-bis(4-dimethylcarbamoylthiobenzylthio)benzylthio]benzylthio}benzoi c acid methyl

3.21 g of the 3,5-bis(dimethylthiocarbamoylthio)benzoic acid methyl obtained in (B) was dissolved in 300 ml of acetone, and agitated for 2 hours at room temperature after addition of 2.1 equivalents of sodium methoxide. After agitation was complete, 12.0 g of the 3,5-bis[3,5-bis(4-dimethylcarbamoylthiobenzylthio)benzylthio]benzyl chloride obtained in (H) was added and reacted for 3 hours. After completion of the reaction, the acetone was distilled off under reduced pressure. The resulting residue was purified by column chromatography to obtain 9.81 g of the 3,5-bis{3,5-bis[3,5-bis(4-dimethylcarbamoylthiobenzylthio)benzylthio]benzylthio}benzoi c acid methyl shown by Formula (14) below.

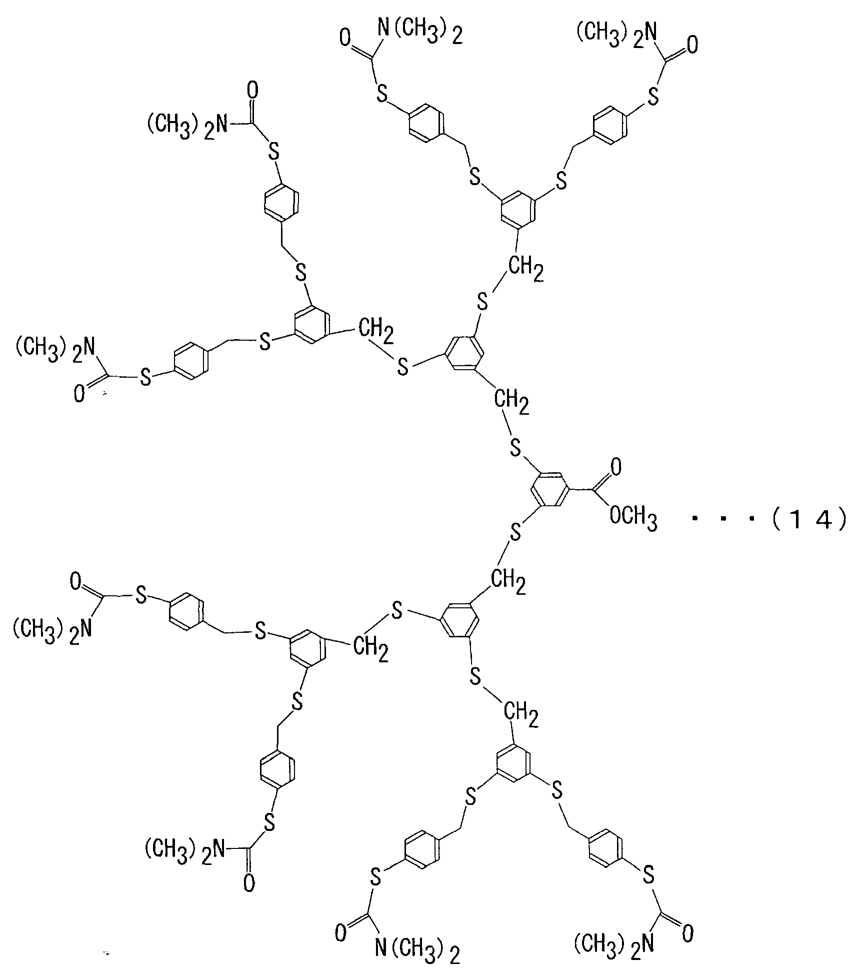

### (J) Manufacture of 3,5-bis{3,5-bis[3,5-bis(4-dimethylcarbamoylthiobenzylthio)benzylthio]benzylthio}benzyl alcohol

9.50 g of the 3,5-bis{3,5-bis[3,5-bis(4-dimethylcarbamoylthiobenzylthio)benzylthio]benzylthio}benzoi c acid methyl obtained in (I) was dissolved in 100 ml of toluene, and a 70 wt% toluene solution containing 1.2 mole of sodium hydrogenated bis(2-methoxyethoxy)aluminum was dripped in over the course of 30 minutes at between 5°C and 10°C in a flow of dry nitrogen. After completion of dripping, this was reacted for another hour at between 5°C and 10°C in a flow of dry nitrogen. After completion of the reaction, this solution was added with agitation to 150 ml of a 10% hydrochloric acid solution which had been cooled to between 0°C and 5°C, and extracted twice with 100 ml of ethyl acetate. After extraction, the organic layer was washed successively with saturated sodium chloride solution and saturated sodium bicarbonate solution, and then dried with magnesium sulfate. After the ethyl acetate had been distilled off under reduced pressure, the residue was purified by silica gel column chromatography (developing solvent = 1:1 chloroform:hexane) to obtain 7.20 g of the 3,5-bis {3,5-bis [3,5-bis (4-dimethylcarbamoylthiobenzylthio)benzylthio]benzylthio} benzyl alcohol shown by Formula (15) below.

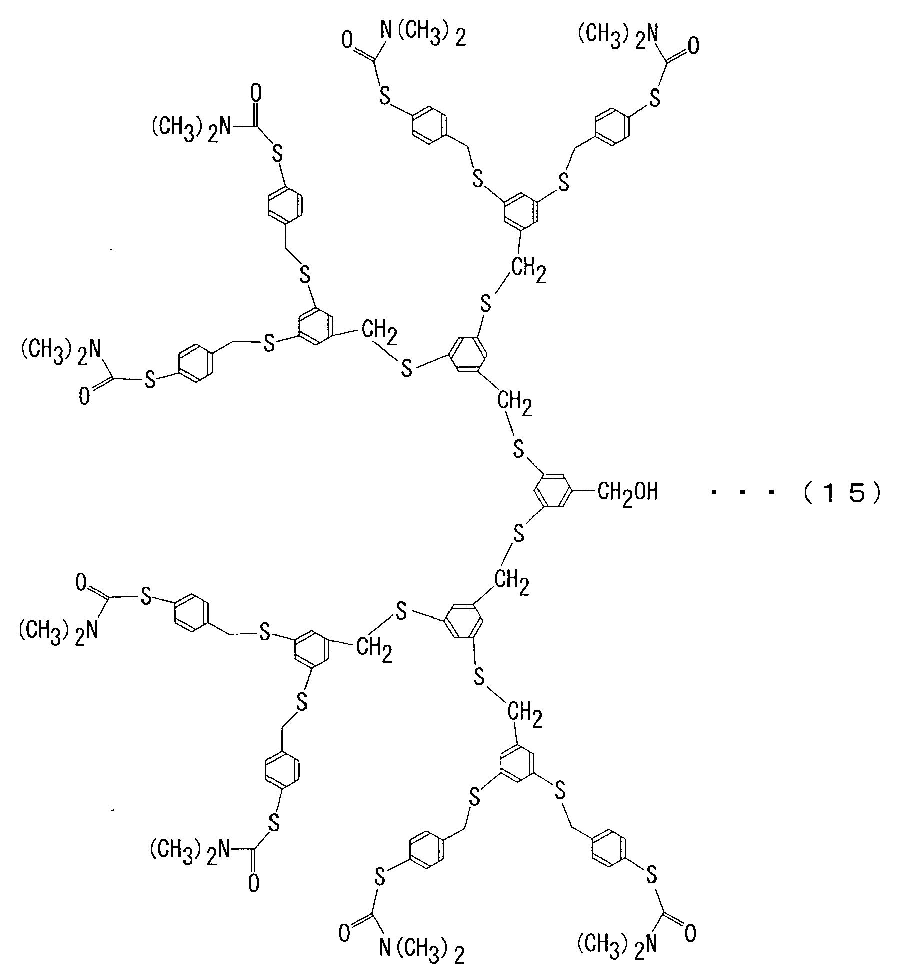

### (K) Manufacture of N-(3-bromopropionyl)-4-nitro-1-naphthylamine

3.23 g of 4-nitronaphthylamine was dissolved in 50 ml of dried tetrahydrofuran solution, and 1.1 equivalents of 3-bromopropionyl chloride dissolved in 10 ml of dried tetrahydrofuran were dripped in with agitation at between 5°C and 10°C in a flow of dry nitrogen. After completion of dripping, the reaction was continued for 2 hours at between 5°C and 10°C in a flow of dry nitrogen. After completion of the reaction, 50 ml of ice water was added under reduced pressure, and the mixture was extracted twice with 50 ml ethyl acetate. After extraction, the organic layer was washed successively with saturated sodium chloride solution and saturated sodium bicarbonate solution, and dried with magnesium sulfate. Next, the ethyl acetate was distilled off under reduced pressure, and the residue was recrystallized with a small amount of ethanol to obtain 2.65 g of the N-(3-bromopropionyl)-4-nitro-1-naphthylamine shown by Formula (16) below.

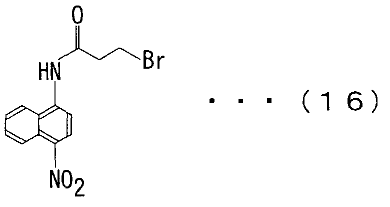

### (L) Manufacture of the intermediate excitation medium, N-[3-13,5-bis{3,5-bis[3,5-bis(4-mercaptobenzylthio)benzylthio]benzylthio}benzyloxy}-propionyl-4-nitro-1-naphthylamine.

The 3,5-bis{ 3, 5-bis [3, 5-bis (4-dimethylcarbamoylthiobenzylthio)benzylthio]benzylthio} benzyl alcohol obtained in (J) was dissolved in 50 ml of dried tetrahydrofuran. Next, a 60% oil suspension containing 1 equivalent of sodium hydride (NaH) was added at between 0°C and 5°C in a flow of dry nitrogen, and agitated for 30 minutes. Next, 2 equivalents of the N-(3-bromopropionyl)-4-nitro-1-naphthylamine obtained in (K) were added at between 0°C and 5°C in flow of dry nitrogen, and reacted for 2 hours at room temperature. After completion of the reaction, this was washed with saturated sodium chloride solution after addition of 50 ml of chloroform, and dried with magnesium sulfate anhydride. After concentration under reduced pressure, the residue was dissolved in 50 ml acetone, and 9.0 equivalents of sodium methoxide were added thereto and agitated for 2 hours at room temperature. After agitation, the acetone was distilled off under reduced pressure. 50 ml of ice water was added to the resulting residue, which was then extracted twice with 30 ml chloroform. After extraction, the organic layer was washed successively with saturated sodium chloride solution and saturated sodium bicarbonate solution, and dried with magnesium sulfate anhydride. After the chloroform had been distilled off under reduced pressure, the residue was purified by column chromatography to obtain 0.62 g of the N-[3-{3,5-bis{3,5-bis[3,5-bis(4-mercaptobenzylthio)benzylthio]benzylthio}benzyloxy}-propionyl-4-nitro-1-naphthylamine shown by Formula (1) above.

Next, a molecular bonding device 100 equipped with a probe 25 of this embodiment is explained in detail.

As shown in Figure 1(B), molecular bonding device 100 is equipped primarily with probe 25, intermediate excitation medium 18a and external energy supply part 27. Intermediate excitation medium 18a constitutes probe 25.

In the sample configuration shown in Figure 1(B), molecular bonding device 100 is also equipped with transparent substrate 24 as the fixing member (also called the support member), scanner 36, cantilever 38, piezo-electric shaker 40, laser 42, photo detector 44, controller 46 and oscillator 48.

External energy supply part 27 is provided with light source 16 as the external energy supply source, shutter 50, filter 51 (here a band-pass filter), mirror 52 and lens 54. Controller 46 here is connected electrically to scanner 36, photo detector 44 and oscillator 48. Oscillator 48 is connected electrically to piezo-electric shaker 40 and shutter 50. Scanner 36 supports substrate 24 and can move substrate 24 both along the main plane (orthogonal X and Y directions) and perpendicular (Z direction) to the main plane of substrate 24 in response to signals from controller 46. This configuration allows probe 25 to scan the top of substrate 24. Moreover, under the control of controller 46 this scanner 36 is capable of setting the XY coordinates of substrate 24 with sufficient positioning accuracy so as to allow bonding as described above with respect to the tip of probe 25. In particular, by keeping the misalignment of the support with respect to substrate 24 within 1 nm it is possible to accomplish the bonding with accuracy in molecular units (details described below).

Photo detector 44 detects light from laser 42 which is reflected by cantilever 38, and outputs signals to controller 46 on the basis thereof. Piezo-electric shaker 40 is attached to one end of cantilever 38 which has probe 25 attached to the other end, and oscillates probe 25 by oscillating cantilever 38 based on signals from oscillator 48. The amplitude, phase and frequency changes of this oscillation are extracted as signals and used to control the spacing between probe 25 and substrate 24. An optical lever system is used here, but the system for controlling the spacing between probe 25 and substrate 24 is not limited thereby, and for example an optical interference system could be used. Shutter 50 blocks or lets pass excitation light (hv) from light source 16 based on signals from oscillator 48. External energy supply 27 supplies external energy (also called excitation energy) to intermediate excitation medium 18a which excites intermediate excitation medium 18a described below which is part of probe 25. Specifically, light from light source 16 is reflected from mirror 52, and focused by lens 54 before reaching intermediate excitation medium 18a. Light source 16 here is for example a mercury xenon lamp.

The intermediate excitation medium 18a, N-[3-{3,5-bis{3,5-bis[3,5-bis(4-mercaptobenzylthio)benzylthio]benzylthio}benzyloxy}-propionyl]-4-nitro-1-naphthylamine, can be fixed to substrate 12 by the following procedure.

First, an 0.1 mmol/L chloroform solution of the N-[3-{3,-bis {3, 5-bis [3, 5-bis (4-mercaptobenzylthio)benzylthio]benzylthio}benzyloxy}-propionyl]-4-nitro-1-naphthylamine is prepared. This chloroform solution is then applied to the gold surface of support 12 by dip coating. Next, the gold surface is washed with chloroform. After washing, intermediate excitation medium 18a which is a probe molecular structure having mercapto groups and which has bonded to the gold surface of support 12 is left fixed to this support 12. A probe 25 (also called a photoexcited triplet probe) consisting of one unit of intermediate excitation medium 18a fixed to the tip of support 12 is thus obtained. In this configuration one unit of the intermediate excitation medium is fixed to the tip of support 12, but more than one could also be fixed. Moreover, the method of fixing intermediate excitation medium 18a to support 12 is not limited to the above, and for example any other suitable method could be used such as one in which the surface area of support 12 is further reduced by causing a gold particle to be adsorbed on the exposed tip, and intermediate excitation medium 18a is then fixed to this gold particle.

Because it is provided principally with probe 25, substrate 24, scanner 36, cantilever 38, laser 42 and photo detector 44, this molecular bonding device 100 can also function as an atomic force microscope (AFM), but it need not do so.

An extra-high pressure mercury lamp, low pressure mercury lamp, xenon lamp, halogen lamp, fluorescent light, gas laser, liquid laser, solid state laser or the like can also be used as light source 16. Ultraviolet light rays, visible light rays, infrared light rays, X-rays or the like can also be used as the light. These light sources and lights can be selected appropriately out of considerations of wavelength and light intensity.

Next, a molecular bonding method using this molecular bonding device 100 is explained with reference to Figures 2(A), (B) and (C).

This embodiment uses a photosensitization reaction caused by intermediate excitation medium 18a fixed on support 12. Specifically, an example is explained of a photosensitization reaction in which a bonding reaction occurs as a result of energy transfer (also called photoexcited energy transfer) from the excited intermediate excitation medium. In this case, the physical effect of the intermediate excitation medium is explained as a polymerization reaction using excited triplet energy transfer, but this example is not limiting and excited singlet energy transfer could also be used for example.

First, in this sample configuration a monolayer molecular film (LB film) of the compound defined by the following general formula (17) is formed on the surface of substrate 24: 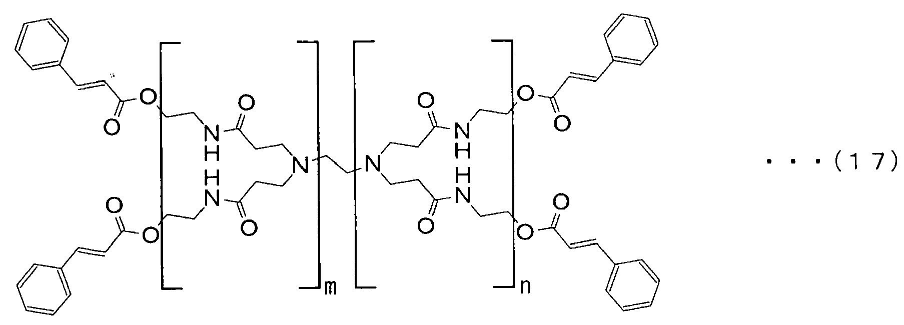
(wherein m and n are each independently natural numbers between 1 and 10).

Specifically the monomer N,N,N'N'-tetra[N",N"-bis{N"'N"'-di-((cinnamoyloxy-ethyl)-carbamoyl-ethyl)-amino-ethylcarbamoyl-ethyl}amino-ethylcarbamoyl-ethyl]ethylenediamine 26 represented by Formula (17') below in which m = n = 3 in the Formula (17) above is preferably applied and fixed on substrate 24, which is a sapphire substrate. An example using this compound 26 is explained below.

First, N,N,N'N'-tetra[N",N"-bis{N'''N'''-di-((cinnamoyloxy-ethyl)-carbamoyl-ethyl)-amino-ethylcarbamoyl-ethyl}amino-ethylcarbamoyl-ethyl]ethylenediamine 26, which is the monomer represented by (17') below, is applied and fixed on substrate 24. These monomers are the target of probe scanning by probe 25.

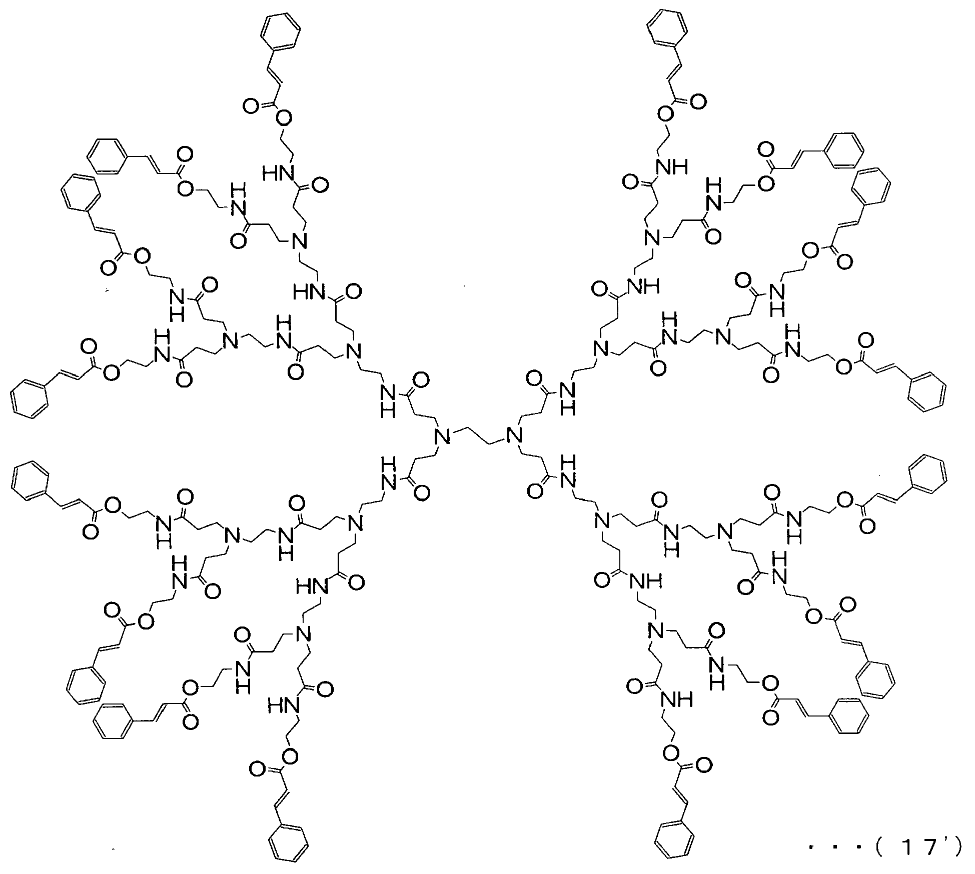

Specifically, first an 0.1 mmol/L chloroform solution of N,N,N'N'-tetra[N",N"-bis{N'''N'''-di-((cinnamoyloxy-ethyl)-carbamoyl-ethyl)-amino-ethylcarbamoyl-ethyl}amino-ethylcarbamoyl-ethyl]ethylenediamine was prepared. A suitable amount of this chloroform solution was then dripped on a water surface and the chloroform was evaporated, forming a monolayer molecular film of N,N,N'N'-tetra[N",N"-bis {N'''N'''-di-((cinnamoyloxy-ethyl)-carbamoyl-ethyl)-amino-ethylcarbamoyl-ethyl}amino-ethylcarbamoyl-ethyl]ethylenediamine on the water surface. This monolayer molecular film was transferred to the cleaned substrate 24, forming a Langmuir Blodgett (LB) film on substrate 24. This LB film functions as the raw material of a resist for forming a resist pattern. The monomer N,N,N'N'-tetra[N",N"-bis{N " 'N " '-di-((cinnamoyloxy-ethyl)-carbamoyl-ethyl)-amino-ethylcarbamoyl-ethyl}amino-ethylcarbamoyl-ethyl]ethylenediamine 26 becomes either first molecule 28a (hereunder sometimes called simply the first molecule), which has bonding residues and is excited by excited triplet energy transfer, or second molecule 30 (hereunder sometimes called simply the second molecule), which has bonding residues and is the bonding target of the excited first molecule 28b . The aforementioned probe scanning target may be either of these first and second molecules 28a and 30.

In addition to the cinnamic acid groups of the N,N,N'N'-tetra[N",N"-bis{N"'N"'-di-((cinnamoyloxy-ethyl)-carbamoyl-ethyl)-amino-ethylcarbamoyl-ethyl}amino-ethylcarbamoyl-ethyl]ethylenediamine of this embodiment, the bonding residues may be for example vinyl groups, acrylate groups, methacrylate groups or other aliphatic residues having unsaturated double bonds, alpha-cyanocinnamic acid groups, coumarin groups, chalcone groups, cinnamylidene acetate groups, p-phenylenediacrylate groups, distyrylpyrazine groups or other aromatic residues having unsaturated double bonds, acetylene groups, diacetylene groups or other aliphatic residues having unsaturated triple bonds, diphenylacetylene groups, phenylazide groups, dipyridyldiacetylene groups or other aromatic residues having unsaturated triple bond or groups derived from these residues (the same applies in other embodiments).

Next, substrate 24 having an LB film of N,N,N'N'-tetra[N",N"-bis{N"'N"'-di-((cinnamoyloxy-ethyl)-carbamoylethyl)-amino-ethylcarbamoyl-ethyl}amino-ethylcarbamoyl-ethyl]ethylenediamine 26 is set on scanner 36 (see Figure 1(B)), with the N,N,N'N'-tetra[N",N"-bis{N'''N'''-di-((cinnamoyloxy-ethyl)-carbamoyl-ethyl)-amino-ethylcarbamoyl-ethyl}amino-ethylcarbamoyl-ethyl]ethylenediamine 26 on substrate 24 facing the N-[3-{3,5-bis{3,5-bis[3,5-bis(4-mercaptobenzylthio)benzylthio]benzylthio}benzyloxy}-propionyl-4-nitro-1-naphthylamine 18a of probe 25 at a fixed distance (see Figure 2(A)). At this stage when no external energy is being supplied to intermediate excitation medium 18a, no excited triplet energy transfer occurs. At this stage the distance between the surface of substrate 24 (and therefore monomer 26) and intermediate excitation medium 18a fixed on support 12 is preferably no more than 2 nm so as to effectively allow excited triplet energy transfer, or no more than 10 nm if excited singlet energy transfer is to be applied. Setting this distance allows effective energy transfer between the intermediate excitation medium and the first molecule.

Next, intermediate excitation medium 18a is exposed to excitation light from a light source (mercury xenon lamp 16) as the external energy.

Specifically, when exposing intermediate excitation medium 18a to excitation light, controller 46 interlocks piezo shaker 40 and shutter 50 by means of oscillator 48 based on signals regarding displacement of probe 25 detected by photo detector 44, and causes intermediate excitation medium 18a to be exposed to excitation light when the tip of probe 25 and N,N,N'N'-tetra[N",N"-bis {N'''N'''-di-((cinnamoyloxy-ethyl)-carbamoyl-ethyl)-amino-ethylcarbamoyl-ethyl}amino-ethylcarbamoyl-ethyl]ethylenediamine 26 have approached to a fixed distance of one another. That is, controller 46 causes probe 25 to oscillate vertically relative to substrate 24, and causes intermediate excitation medium 18a to be exposed to excitation light when intermediate excitation medium 18a at the tip of probe 25 is at its closest point to monomer 26. Intermediate excitation medium 18a here is exposed to pulse light or in other words to intermittent light of intensity 2 mW/cm² from mercury xenon lamp 16 which has passed through band-pass filter 51 with a transmissible wavelength range of 365 nm and a half band width of 10 nm. The light intensity may be any intensity at which one intermediate excitation medium 18a is exposed to and excited by at least one photon, and can be set at will by selecting the configuration and materials of the device and the like.

Exposure to the excitation light does not need to be intermittent if the oscillating frequency of oscillator 48 is sufficiently shorter than the relaxation time of the excited state of intermediate excitation medium 18a.

When exposed to external energy, intermediate excitation medium 18a fixed on support 12 is excited and passes through an excited singlet state to excited triplet state 18b. Specifically, the probe branch part 182a of intermediate excitation medium 18b which functions as the photosensitized molecule enters excited state 182b.

As a result, excited triplet energy which is energy to be used for boning is transferred from intermediate excitation medium 18b in its excited triplet state to a specific first molecule 28a, which is in the vicinity of intermediate excitation medium 18b. Specifically, excited triplet energy is transferred from intermediate excitation medium 18b to first molecule 28a, which is within the transferable range of excited triplet energy or in other words within a range of 2 nm. That is, each time intermediate excitation medium 18a is excited, one bonding residue of first molecule 28a is excited, resulting in first molecule 28b, which has a bonding residue in an excited state. One of the multiple cinnamic acid groups of first molecule 28a is excited each time intermediate excitation medium 18a is excited (Figure 2(B)).

That is, with this embodiment excited triplet energy transfer can be made to occur selectively only from intermediate excitation medium 18b to first molecule 28a which is within the transferable range of the excited triplet energy.

As a result, first molecule 28b in its excited triplet state is bonded by a polymerization reaction with second molecule 30, the bonding target which is to be bonded with first molecule 28b and which is in the vicinity of first molecule 28b.

In detail, a polymer with cyclobutane rings is produced by addition polymerization of double bonds in the benzylic position between or within monomers 26. That is, in this sample embodiment, one of the cinnamic acid groups of first molecule 28a which is excited by one excitation of intermediate excitation medium 18a bonds to one of the multiple cinnamic acid groups of second molecule 30. Alternatively, when second molecule 30 is first molecule 28a itself, one cinnamic acid group of first molecule 28a which is excited by one excitation of intermediate excitation medium 18a bonds to one of the other cinnamic acid groups of the same first molecule 28a. Because polymers differ depending on the polymerization conditions and the like, a desirable polymer can be selected at will according to the objective and design.

Polymer 32 can be formed in this way on substrate 24 (Figure 2(C)).

In this sample configuration, no excited triplet energy transfer occurs as long as intermediate excitation medium 18a is not exposed to excitation light. Moreover, exposure to excitation light is accomplished with intermediate excitation medium 18a and first molecule 28a sufficiently close to one another or in other words with first molecule 28a placed at a distance at which it can be excited by energy emitted by intermediate excitation medium 18a.

As a result, in this sample configuration not only can excited triplet energy be transferred effectively, but the positioning accuracy and resolution of polymer 32 on substrate 24 can be controlled based on the intermediate excitation medium.

Next, probe 25 is moved to another position above substrate 24, or in other words scanned, and the aforementioned methods are repeated to form polymer 32 on substrate 24.

Next, differences between the material properties (for example, solubility, sublimation temperature or the like) of the monomer and the polymer can be used to form a resist pattern by leaving polymer 32 alone on the substrate. For example, the monomer N,N,N'N'-tetra[N",N"-bis{N "'N"'-di-((cinnamoyloxy-ethyl)-carbamoyl-ethyl)-amino-ethylcarbamoyl-ethyl}amino-ethylcarbamoyl-ethyl]ethylenediamine 26 is dissolved by washing the surface of substrate 24 with chloroform, leaving only polymer 32 on substrate 24. Thus, only polymer 32, which was formed in response to excitation light exposure, is left on substrate 24. Polymer 32, which was formed in response to excitation light exposure, can be recognized by the AFM function of molecular bonding device 100.

As is clear from the explanation above, with this embodiment molecules can be selectively bonded to one another using the transfer of energy generated by excitation of an intermediate excitation medium fixed on a support. Resolution in units of one molecule can be reproducibly obtained because the positioning accuracy of the support relative to the substrate is within 1 nm. In the aforementioned embodiment a substrate such as a sapphire substrate was used as the fixing member, but for example a silicon substrate, gold substrate or the like can be used in place of the sapphire substrate, and resolution in units of 1 molecule can also be obtained using these.

As a result, resolution in units of 1 molecule can be obtained reproducibly based on an intermediate excitation medium when bonding molecules to one another. Consequently, highly reliable semiconductor devices can be obtained with greater miniaturization and densification than before by applying this molecular bonding method to microfabrication techniques in the preparation of resist patterns and the like.

Moreover, molecular wiring consisting of molecular wires with a width of 1 molecule for example can be prepared if the positioning accuracy of the support relative to the substrate is within 1 nm when scanning probe 25 on substrate 24. When making molecular wiring, it is effective in some cases to select the combination of intermediate excitation medium and monomer such that one excitation of the intermediate excitation medium produces a cascade in which the molecules are polymerized one after another with each other on the substrate.

In this embodiment, intermediate excitation medium 18a, which is softer than the probe, is fixed on the tip of the probe. Deterioration of the probe due to direct contact of the probe itself with the substrate is thus prevented.

Intermediate excitation medium 18a in this embodiment can be any which has a triplet energy level higher than the triplet energy level of the bonding residues of monomer 26, and the combination of intermediate excitation medium and monomer can be selected at will according to the objective and design. Moreover, a material having functional groups for causing selective chemical adsorption such as coordinate bonding, covalent bonding, ionic bonding or the like with support 12 can be selected as intermediate excitation medium 18a. To this end, silver (Ag), copper (Cu), platinum (Pt), mercury (Hg), iron (Fe), iron oxide (Fe₂O₃), gallium arsenide (GaAs), indium phosphide(InP) or the like for example can be used as desired as the support as well as gold. For details about combinations of supports and intermediate excitation mediums for selective chemical adsorption, see (1) H. Wolf et al., *J*. *Phys. Chem.* 99, 7102 (1995), (2) P. E. Laibinis and G. M. Whitesides, *J*. *Am. Chem. Soc.* 114, 1990 (1992), (3) A. Ulman, *Chem. Rev.* 96, 1533 (1996), (4) M. R. Linford and C. E. D. Chidsey, *J*. *Am. Chem.* Soc. 115, 12630 (1993), (5) M. R. Linford, P. Fenter, P.M. Eisenberger, C. E. D. Chindsey, *J*. *Am. Chem. Soc.* 117, 3145 (1995), (6) *J*. Sagiv, *J*. Am. Chem. *Soc.* 102, 92 (1980), (7) H. Lee et al., J. *Phys. Chem.* 92, 2597 (1988), and (8) D. L. Allara and R. G. Nuzzo, *Langmuir* 1, 52 (1985).

Cases are also included in which the first molecule and the bonding target which is to be bonded to the first molecule are selectively bonded by a polymerization reaction, crosslinking reaction, radical reaction or other reaction.

Since the intermediate excitation medium is fixed to the support by selective chemical adsorption, the aforementioned bonding reactions can be accomplished in a liquid, vacuum or gas atmosphere which allows bonding energy transfer, or within a solid as long as the energy for bonding can be transferred from the surface.

Moreover, monomer 26 is not limited to being fixed as an LB film on substrate 24. It is sufficient for a suitable amount of monomer 26 to be supplied between substrate 24 and intermediate excitation medium 18a. Moreover, the object of energy transfer from excited intermediate excitation medium 18a is not limited to a monomer molecule such as N,N,N'N'-tetra[N",N"-bis{N"'N"'-di-((cinnamoyloxy-ethyl)-carbamoylethyl)-amino-ethylcarbamoyl-ethyl}amino-ethylcarbamoyl-ethyl]ethylenediamine 26, and may also be a polymer.

### (Second Embodiment)

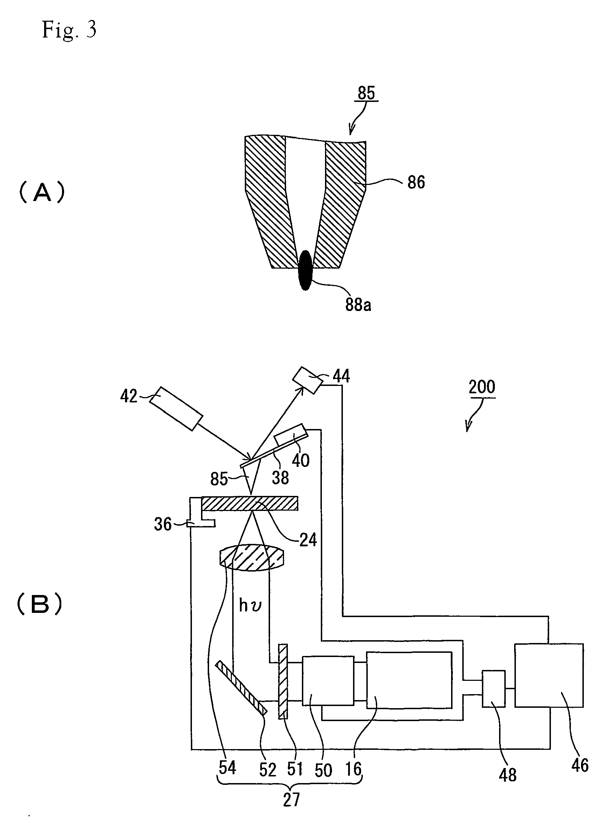

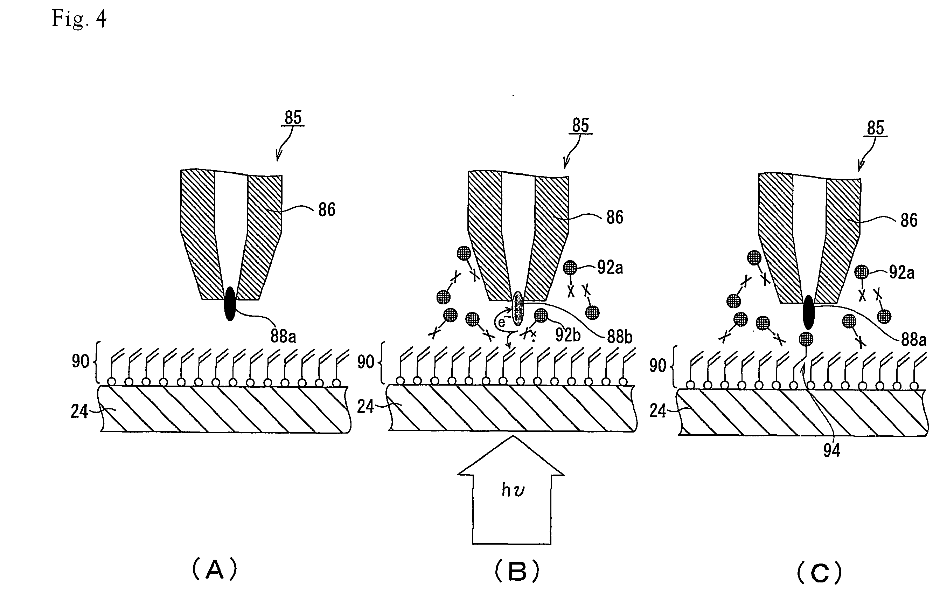

The second embodiment of the present invention is explained with reference to Figures 3 and 4. Figure 3(A) is a partial cross-section showing a simplified view of the configuration of probe 85 of this embodiment. Figure 3(B) is a partial cross-section showing a simplified view of the configuration of molecular bonding device 200 equipped with probe 85 of this embodiment. The main differences between this embodiment and the first embodiment are that the probe is provided with a photocatalyst as the intermediate excitation medium, and that molecules are arranged in desired positions using a radical reaction from photoexcited electron transfer.

As shown in Figure 3(A), probe 85 of this embodiment is provided with support 86, which forms the body of the probe, and intermediate excitation medium 88a which is fixed on support 86.

Support 86 of this embodiment is a glass nanopipette probe with a bore of 8 nm. This probe is obtained for example by drawing a glass capillary tube with an outer diameter of 1 mm with a pipette puller (Sutter P2000).

In this embodiment, a titanium dioxide (TiO₂ also called "titania" below) particle about 10 nm in size which is a photocatalyst (also called a photoactive catalyst) can be used as intermediate excitation medium 88a.

Intermediate excitation medium 88a is not limited thereby, however, and any that functions as a photocatalyst can be selected at will. A photosensitized molecule can be used instead of a photocatalyst as intermediate excitation medium 88a.

The titania which is intermediate excitation medium 88a is fixed on support 86 by the following procedures.

First, an 0.1% aqueous dispersion of titania particles is prepared. One end of the aforementioned nanopipette 86 is dipped in this aqueous dispersion, and the aqueous dispersion is sucked through the other end by a vacuum pump. In this way, probe (sometimes called the photoexcited molecule transfer probe) 85 is obtained having only one of the titania particles is fixed to the tip of nanopipette probe 86 by physical adsorption. Probe 85 of this sample configuration has one particle of titania particles 88a as the intermediate excitation medium fixed to the tip of support 86, which is the probe body, but multiple particles can also be fixed to support 86. Moreover, the method of fixing intermediate excitation medium 88a to support 86 is not limited to the above, and any desirable method can be used.

First, molecular bonding device 200 is not explained in detail here because, as shown in Figure 3(B), apart from the configuration of probe 85 its configuration is similar to that of the molecular bonding device 100 explained in the first embodiment.

Next, a molecular bonding method using this molecular bonding device 200 is explained with reference to Figures 4 (A), (B) and (C).

This embodiment uses a photosensitization reaction from intermediate excitation molecule 88a fixed on support 86. Specifically, the photosensitization reaction is explained taking as an example a bonding reaction caused by electron transfer (sometimes called photoexcited electron transfer) between the excited intermediate excitation medium and the first molecule described below. For details regarding photoexcited electron transfer, which is a kind of photocatalytic reaction using a photocatalyst, see "Solar light induced carbon-carbon bond formation via TiO₂ photocatalysis," Laura Cermenati, Christoph Richter and Angelo Albini, *Chem. Commun.,* 805-806 (1998).

First, the silane coupling agent 3-acryloxypropyltrimethoxysilane (Shinetsu Chemical Industries, Shinetsu Silicone) 90 shown by Formula (18) below, which is the second molecule, is fixed to substrate 24, which is the fixing member (also called the support member).

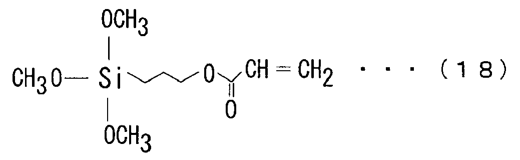

Specifically, first an aqueous acetic acid solution (concentration 0.05 wt% to 0.1 wt%) was agitated as 3-acryloxypropyltrimethoxysilane was dripped in slowly to a concentration of 0.2 wt%. After completion of dripping, this was agitated for a further 60 minutes and filtered with a 0.45 µm filter cartridge.

The resulting filtrate can be applied by dip coating and dried for 5 minutes at 110°C to fix the 3-acryloxypropyltrimethoxysilane on substrate 24. 3-acryloxypropyltrimethoxysilane 90 fixed on substrate 24 becomes the second molecule, which has bonding residues and is the bonding target of first molecule 92a, which has bonding residues which are excited by photoexcited electron transfer. First molecule 92a is sometimes called the molecule to be fixed because it is fixed to substrate 24 by the subsequent bonding reaction. Second molecule 90 is sometimes called the fixed molecule because it is already fixed to substrate 24.

Next, substrate 24 with second molecule 90 is set in a scanner (see Figure 3(A), and second molecule 90 on substrate 24 is arranged facing titania particle 88a of probe 85 at a fixed distance (see Figure 4(A)). At this stage when no external energy is being supplied to titania particle 88a which is the intermediate excitation medium, no photoexcited electron transfer occurs.

Next, a suitable amount of the 4-methoxybenzyltrimethylsilane shown by Formula (19) below as the first molecule having radical-generating groups is supplied between titania particle 88a and substrate 24. A solution in which 0.2 g of 4-methoxybenzyltrimethylsilane is dissolved in 40 ml of acetonitrile (CH₃CN) for example is supplied here.

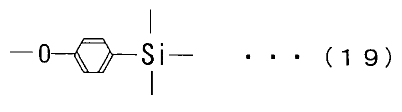

Next, titania particle 88a is exposed to external energy in the form of excitation light from mercury xenon lamp 16 in a method similar to that used in the first embodiment. Particle 88a here is exposed to pulses or in other words continuously to light at an intensity of 2 mW/cm² from mercury xenon lamp 16 which passes through a band-pass filter with a transmissible wavelength range of 365 nm and a half band width of 50 nm. The light intensity may be an intensity at which one intermediate excitation medium 18a is exposed to and excited by at least one photon, and can be set at will by selecting the configuration and materials of the device and the like.

When exposed to external energy, titanium particle 88a is excited and becomes titania 88b in an excited state (also called an active state). As a result, photoexcited electron transfer occurs between titania particle 88b and first molecule 92a, which is in the vicinity of titania particle 88b (electron donation from first molecule 92a to titania particle 88b in an excited state is explained here, but in some cases electrons may be donated in the opposite direction from excited titania particle 88b to first molecule 92a). That is, photoexcited electron transfer occurs between titania particle 88b and first molecule 92a, which is within the range of possible electron transfer from titania particle 88b. Due to this electron transfer, first molecule 92a is oxidized, becoming radical ion 92b in an excited state (see Figure 4(B)). One radical is produced each time titania particle 88a is excited.

As a result, first molecule 92b, which is now a radical ion, is bonded by a radical reaction to a specific bonding target, second molecule 90, which is in the vicinity of radical ion 92b, producing combination 94 (see Figure 4(C)). Because this combination 94 is a molecular structure having a framework which functions as first molecule 92a, first molecule 92a can be effectively fixed in a specific position on substrate 24 by this bonding. In this sample configuration, one molecule of the first molecule can be fixed in a specific position each time titania particle 88a is excited.

Next, by moving probe 85 to another position on the upper surface of substrate 24 and repeating the methods described above as in the first embodiment, single molecules of the first molecule can be successively position or in other words fixed on substrate 24. A variety of functional molecules can be used as the first molecule to be fixed here according to the objective and design.

Next, methods similar to those used in the first embodiment can be used to leave combination 94 alone on substrate 24. In this way, combination 94 which was formed in response to exposure to excitation light can be recognized by the AFM function of molecular bonding device 200.

As is clear from the above explanation, in this embodiment a molecule to be fixed can be placed in a specific position using electron transfer generated when an intermediate excitation medium fixed on a support is excited.

As a result, in this embodiment one molecule of the molecule to be fixed can be fixed with great accuracy in a specific position based on the physical action generated by the intermediate excitation medium when an intermediate excitation medium with a stable excitation state is excited once. That is, in this sample configuration molecules can be positioned with a resolution of a single molecule.

Consequently, optoelectronic elements and other molecular devices can be prepared for example using a functional molecule as the first molecule by arranging such functional molecules in desired positions on a substrate.

When radical ion 92b is generated by oxidation caused by intermediate excitation medium 88a using a semiconductor as in this embodiment, intermediate excitation medium 88a can be selected such that the valence band potential of intermediate excitation medium 88b in the excited state is higher than the oxidation potential of the radical ion generator. Thus, these combinations can be selected as desired according to the objective and design. Moreover, an acceptor which accepts electrons excited in the conduction band by photoexcitation can also be supplied with the first molecule as necessary when supplying the first molecule. The acceptor here may be any with a reduction potential lower than the conduction band potential of the intermediate excitation medium, and when the intermediate excitation medium is titania, maleic acid can be used for example. Moreover, although in this example the bonding target was the second molecule, the bonding target may also be a substrate or other material body rather than a molecule. A configuration is also possible in which the molecule which will be the radical ion is a fixed molecule and the bonding target is the molecule to be fixed.

A photosensitized molecule can be used instead of a semiconductor as intermediate excitation medium 88a. In photoexcited electron transfer using a photosensitized molecule, the reduction potential of the photoexcited molecule in an excited state should be higher than the oxidation potential of the radical generator. Consequently, these combinations can be selected as desired according to the objective and design, but for example 1,4-naphthalenedicarbonitrile can be used as the photosensitized molecule and toluene can be arranged as the first molecule. The acceptor in this case can be any with a reduction potential higher than the reduction potential of the ground state of the photosensitized molecule. Details are described in Document 1: "Radical addition to alkenes via electron transfer photosensitization," M. Fagnoni, M. Mella and A. Albini, *J*. *Am. Chem. Soc.* 117, 7877 (1995) and Document 2: "Electron-transfer-photosensitized conjugate alkylation," M. Fagnoni, M. Mella and A. Albini, J. *Org. Chem.* 63, 4026 (1998).

### (Third Embodiment)

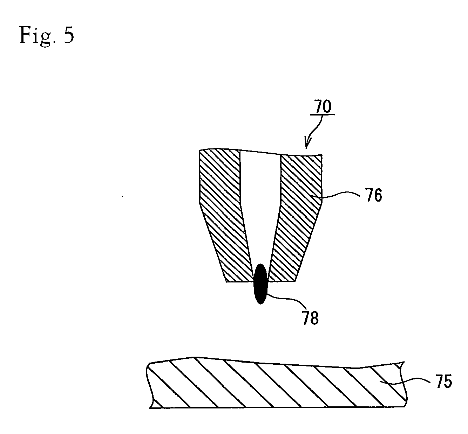

The third embodiment of the present invention is explained with reference to Figures 5, 6 and 7. Figures 5 through 7 are partial cross-sections showing simplified views of configurations of the probe of this embodiment.

The first, second and third probes (70, 90, 110) of this embodiment are mainly configured with an interacting substance which interacts chemically or physically with the probe scanning target described below fixed on a substrate. Sample configurations of each probe are explained below.

Figure 5 shows a sample configuration of first probe 70. First probe 70 is provided mainly with support 76 (corresponding to nanopipette probe 86 of the second embodiment) as the probe body, and for example a particle having magnetism (hereunder sometimes called a magnetic particle) 78 as the interacting substance which is fixed on support 76 and interacts with the probe scanning target.

In this sample configuration, a cobalt (Co) particle can be used as the fixed magnetic particle. The magnetic particle is not limited to a cobalt particle and a suitable one can be selected at will according to the objective and design. Substrate 75 is used as the probe scanning target. A high-density magnetic recording medium for example can be used as substrate 75 here.

As a result, first probe 70 can be used for measurement in a magnetic scanning microscope using the interaction between substrate 75 and cobalt particle 78 on first probe 70 when first probe 70 is scanned on substrate 75, which is the probe scanning target.

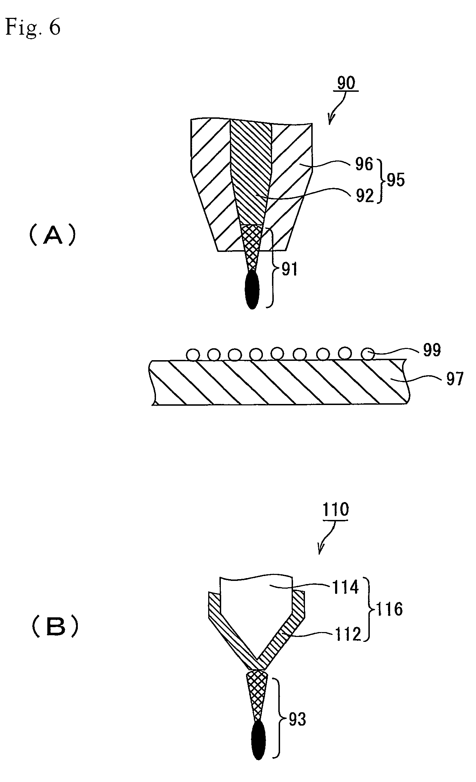

Figure 6(A) shows a sample configuration of second probe 90. Second probe 90 is provided mainly with support 92 (corresponding to the capillary tube 22 explained in the first embodiment), and molecule 91, which is fixed on support 92 and which is an interacting substance which interacts with the probe scanning target.

In this sample configuration, molecule 99 which is the probe scanning target is a molecule which emits fluorescence (that is, a fluorescent molecule), while molecule 91 which is the interacting substance is a molecule which deactivates the fluorescence of the fluorescent molecule by energy transfer. In this sample configuration, for example a dendrimer structure having rhodamine B bonded to the tip so as to maintain the function of deactivating the fluorescence emitted by molecule 99 is used as molecule 91, which is the interacting substance, while rhodamine B is used as molecule 99, which is the probe scanning target. In this example, rhodamine B, which is molecule 99, is bonded to the surface of a sapphire substrate or other substrate 97 using 3-chloropropyltrimethoxysilane for example.

The third probe 110 shown in Figure 6(B) can also be used instead of second probe 90. Like second probe 90, third probe 110 is provided with support 112 and molecule 91 as the interactive substance fixed on support 112, but the difference is that in this configuration support 112 is coated on probe base 114, forming probe body 116.

An outline of the manufacturing method for third probe 110 is explained below. In preparing the probe body, first a probe base material of a specific shape is brought into contact with a gold substrate by means of feedback control, causing gold to attach to the end of the probe base (this is called the gold attachment step). The probe base here is the probe of an AFM but this need not be the case. The contact potential difference between the probe base with attached gold and the gold substrate is measured by the Kelvin probe method to confirm that gold has been coated on the tip of the probe base. When it is found that not enough gold has been coated on the tip of the probe base, the gold coating step is repeated. Thus, probe body 116 is obtained having probe base 114 coated with gold which becomes support 112. Next, for example this probe body 116 is brought carefully near a substrate which has been sprayed with a suitable amount of molecule 93 having the aforementioned mercapto groups (-SH groups). In this sample configuration, a conductive dendrimer structure the tip of which is a carboxyl group (-COOH) is used as molecule 93. Using a molecule 93 with such a structure it is possible to use third probe 110 for measurement in a scanning tunneling microscope as a hydrogen-bonding probe having a carboxyl group as a functional group. As a result, third probe 110 can be obtained by fixing molecule 93 to support 112 by means of selective chemical adsorption between the mercapto group and the gold.

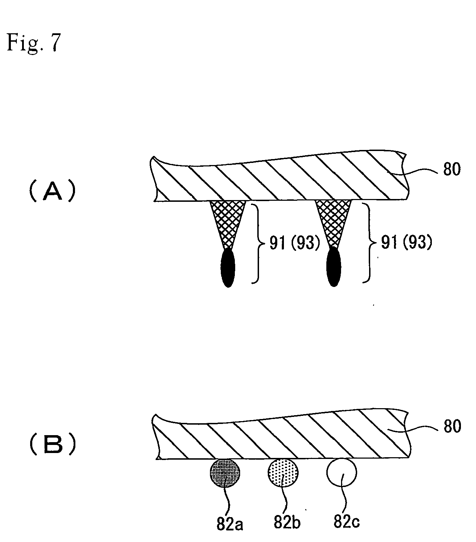

In these sample configurations of the second and third probes, only one molecule of molecule 91 is fixed on the tips of supports 92 and 112, but multiple molecules can also be fixed. Moreover, the molecules 91 and 93 used here are not limited to these, and the active molecules which act physically on the probe scanning target and the number of molecules to be fixed can be selected appropriately according to the objective and target. For example, as shown in Figure 7(A), a configuration can be adopted in which more than one (2 in this case) of the aforementioned molecules 91 and 93 are fixed on support 80. Alternatively, as shown in Figure 7(B), a configuration can be adopted in which multiple (in this case 3: 82a, 82b and 82c) active molecules having different functions are fixed on support 80.

As a result, the distance at which the aforementioned energy transfer is initiated based on the interaction between molecules (91, (93), 99) can be obtained by varying the relative distance between molecules 91 and 93, which are the interacting substances at the tips of second and third probes 90 and 110, and molecule 99, which is the probe scanning target arranged facing molecules 91 and 93.

As is clear from the previous explanation, in this embodiment the interacting substance and the probe scanning target can be made to interact either physically (by dipole interaction, static interaction, magnetic interaction or the like) or chemically (by hydrogen bonding, ionic bonding or the like).

As a result, information about interactions between the interacting substance and the probe scanning target can be obtained based on a resolution determined by the interacting substance (particle or molecule).

The present invention is not limited only to the combinations of the aforementioned embodiments. Therefore, favorable conditions can be combined at any stage and applied to the present invention.

For example, photoexcited energy transfer was used in the aforementioned first embodiment, but a configuration using photoexcited electron transfer would also be acceptable. In the aforementioned second embodiment, photoexcited electron transfer was used, but a configuration using photoexcited energy transfer would also be acceptable.

Moreover, in the aforementioned embodiments the intermediate excitation medium was exposed to external energy in the form of light, but it could also be exposed to electrons, ions or the like, and any form can be used according to the objective and design.

### INDUSTRIAL APPLICABILITY

For example, in the case of a probe having an intermediate excitation medium fixed on a support, the intermediate excitation medium can be excited to selectively bond a first molecule having a bonding residue, which is in the vicinity of that excited intermediate excitation medium, to a bonding target which is to be bonded to the first molecule.

As a result, bonding between the first molecule and the bonding target can be accomplished via the stable excitation state of the intermediate excitation medium, and resolution in single molecule units can be obtained reproducibly based on the intermediate excitation medium.

Moreover, in the case of a probe having a support on which is fixed a substance which interacts with a probe scanning target (interacting substance), the substance interacts with the probe scanning target (for example, by dipole interaction, static interaction, magnetic interaction or the like).

As a result, information can be obtained about interactions acting between the interacting substance and the probe scanning target.

Moreover, in the case of a probe having a support on which is fixed an active molecule which exerts physical action on a probe scanning target, control and measurement on a molecular level based on the active molecule can be accomplished by applying the active molecule to various reactions.

Consequently, the probe of the present invention is useful for example in manufacturing and measuring the interactions and the like of nanodevices for example.

## Claims

1. A probe comprising:
a support; and
an intermediate excitation medium, which is fixed on said support and is excited when external energy is supplied from the outside, and which causes a first molecule in the vicinity thereof having a bonding residue to achieve bonding with a bonding target which is to be bonded to said first molecule.

2. The probe according to Claim 1, wherein either both or one of said first molecule and said bonding target is fixed to a support member.

3. The probe according to Claim 2, wherein said support is positioned with sufficient accuracy with respect to said support member so as to allow said bonding.

4. The probe according to Claim 3, wherein the accuracy is 1 nm or less.

5. The probe according to any one of Claims 1 through 4, wherein, when said intermediate excitation medium is excited, said intermediate excitation medium generates bonding energy which moves from said intermediate excitation medium in an excited state to said first molecule to achieve said bonding.

6. The probe according to Claim 5, wherein movement of said bonding energy from said intermediate excitation medium in said excited state to said first molecule is excited triplet energy transfer.

7. The probe according to any one of Claims 1 through 4, wherein, when said intermediate excitation medium is excited, said bonding is accomplished based on electron transfer between said intermediate excitation medium in said excited state and said first molecule.

8. The probe according to any one of Claims 1 through 7, wherein said external energy is light, electrons or ions.

9. The probe according to Claim 8, wherein
said intermediate excitation medium is a photosensitized molecule, and
said external energy is said light.

10. The probe according to Claim 9, wherein said photosensitized molecule comprises a probe branch which forms the end of said probe, and a plural number of bonding branches extending radially from the tip of said probe branch on the support side to be fixed by selective adsorption to said support.

11. The probe according to Claim 10, wherein
said probe branch and said bonding branches have different structures, and said plurality of bonding branches branch radially from said tip of said probe branch, forming a tree-like structure with said probe branch as a trunk.

12. The probe according to any of Claims 9 through 11, wherein said photosensitized molecule has a dendrimer structure.

13. The probe according to Claim 12, wherein said dendrimer structure is N-[3-{3,5-bis{3,5-bis[3,5-bis(4-mercaptobenzylthio)benzylthio]benzylthio}benzyloxy}-propionyl-4-nitro-1-naphthylamine.

14. The probe according to any one of Claims 9 through 13, wherein said photosensitized molecule is an N-acetyl-4-nitro-1-naphthylamine derivative.

15. The probe according to any one of Claims 9 through 14, wherein one molecule of said photosensitized molecule is fixed on said support.

16. The probe according to Claim 8, wherein said intermediate excitation medium is a photocatalyst and said external energy is said light.

17. The probe according to Claim 16, wherein said photocatalyst is titanium dioxide.

18. The probe according to any one of Claims 1 through 17, wherein said bonding target is a second molecule having a bonding residue.

19. The probe according to any one of Claims 1 through 17, wherein said bonding target is a material body other than a molecule.

20. The probe according to any one of Claims 1 through 19, wherein said intermediate excitation medium is fixed to said support by chemical bonds.

21. The probe according to any one of Claims 1 through 20, wherein said bonding residue is an aliphatic residue having an unsaturated double bond or unsaturated triple bond.

22. The probe according to any one of Claims 1 through 20, wherein said bonding residue is an aromatic residue having an unsaturated double bond or unsaturated triple bond.

23. The probe according to Claim 22, wherein, when said aromatic residue having said unsaturated double bond is a cinnamic acid group, said intermediate excitation medium is N-[3-{3,5-bis{3,5-bis[3,5-bis(4-mercaptobenzylthio)benzylthio]benzylthio}benzyloxy}-propionyl-4-nitro-1-naphthylamine.

24. A probe comprising a support; and
an interacting substance which is fixed on said support and which interacts physically with a probe scanning target.

25. A probe comprising a support; and
an interacting substance which is fixed on said support and which interacts chemically with a probe scanning target.

26. The probe according to Claim 24 or 25, wherein said interacting substance is a molecule.

27. The probe according to Claim 26, wherein said molecule comprises a probe branch that forms the end of said probe and a plural number of bonding branches extending radially from the tip of said probe branch on the support side to be fixed by selective adsoprtion to said support.

28. The probe according to Claim 27, wherein said probe branch and said bonding branches have different structures, and the plurality of bonding branches branch radially from said tip of said probe branch, forming a tree-like structure with said probe branch as a trunk.

29. The probe according to Claim 26 or 28, wherein said molecule has a dendrimer structure.

30. The probe according to any one of Claims 26 or 29, wherein one molecule of said molecule is fixed on said support.

31. The probe according to any one of Claims 24 through 30, wherein said probe scanning target is a molecule.

32. The probe according to Claim 24 or 25, wherein said interactive substance is a particle having magnetism.

33. The probe according to any one of Claims 24 through 32, wherein said interacting substance is fixed to said support by chemical bonds.

34. A probe comprising:
a support; and
an active molecule which is fixed so as to protrude from said support and which acts physically on a probe scanning target.

35. The probe according to Claim 34, wherein said active molecule comprises a probe branch that forms the end of said probe and a plural number of bonding branches extending radially from the tip of said probe branch on the support side to be fixed by selective adsorption to said support.

36. The probe according to Claim 35, wherein said probe branch and said bonding branches have different structures, and said plurality of bonding branches branch radially from the tip of said probe branch, forming a tree-like structure with said probe branch as a trunk.

37. The probe according to any one of Claims 34 through 36, wherein the active molecule has a dendrimer structure.

38. The probe according to any one of Claims 34 through 37, wherein one molecule of said active molecule is fixed on said support.

39. The probe according to any one of Claims 34 through 38, wherein said active molecule is fixed to said support by chemical bonds.

## Amended claims

### Amended claims under Art. 19.1 PCT

**21.** The probe according to any one of Claims 1 through 20, wherein said bonding residue is an aliphatic residue having an unsaturated double bond or unsaturated triple bond.

**22.** The probe according to any one of Claims 1 through 20, wherein said bonding residue is an aromatic residue having an unsaturated double bond or unsaturated triple bond.

**23.** The probe according to Claim 22, wherein, when said aromatic residue having said unsaturated double bond is a cinnamic acid group, said intermediate excitation medium is N-[3-{3,5-bis{3,5-bis[3,5-bis(4-mercaptobenzylthio)benzylthio]benzylthio}benzyloxy}-propionyl-4-nitro-1-naphthylamine.

**24.** Amended) A probe comprising:
a support; and
a molecule which is fixed on said support and which interacts physically with a probe scanning target, wherein
said molecule comprises a probe branch that forms the end of said probe and a plural number of bonding branches extending radially from the tip of said probe branch on the support side to be fixed by selective adsorption to said support.

**25.** Amended) A probe comprising;
a support; and
a molecule which is fixed on said support and which interacts chemically with a probe scanning target, wherein
said molecule comprises a probe branch that forms the end of said probe and a plural number of bonding branches extending radially from the tip of said probe branch on the support side to be fixed by selective adsorption to said support.

**26.** Amended) The probe according to Claim 24 or 25, wherein said molecule is a probe molecule which has a dendrimer structure.

**27.** Amended) The probe according to Claim 24 or 25, wherein said probe branch and said bonding branches have different structures, and said plurality of bonding branches branch radially from said tip of said probe branch, forming a tree-like structure with said probe branch as a trunk.

**28.** Amended) The probe according to Claim 27, wherein said molecule has a dendrimer structure.

**29.** Amended) The probe according to any one of Claims 24 through 28, wherein one molecule of said molecule is fixed on said support.

**30.** Amended) The probe according to any one of Claims 24 through 29, wherein said probe scanning target is a molecule.

**31.** Amended) The probe according to any one of Claims 24 through 30, wherein said molecule is fixed to said support by chemical bonds.

**32.** Amended) A probe comprising:
a support; and
an active molecule which is fixed so as to protrude from said support and which acts physically on a probe scanning target, wherein
said active molecule comprises a probe branch that forms the end of said probe and a plural number of bonding branches extending radially from the tip of said probe branch on the support side to be fixed by selective adsorption to said support.

**33.** Amended) A probe comprising:
a support; and
an active molecule which is fixed so as to protrude from said support and which acts physically on a probe scanning target, wherein said active molecule has a dendrimer structure.

**34.** Amended) The probe according to Claim 32, wherein said probe branch and said bonding branches have different structures, and said plurality of bonding branches branch radially from said tip of said probe branch, forming a tree-like structure with said probe branch as a trunk.

**35.** Amended) The probe according to Claim 32 or 34, wherein said active molecule has a dendrimer structure.

**36.** Amended) The probe according to any one of Claims 32 through 35, wherein one molecule of said active molecule is fixed on said support.

**37.** Amended) The probe according to any one of Claims 32 through 36, wherein said active molecule is fixed to said support by chemical bonds.
